# EUROPÄISCHE PATENTSCHRIFT

(11) **EP 2 231 492 B1**
(45) Veröffentlichungstag und Bekanntmachung des Hinweises auf die Patenterteilung: **06.09.2017**
(21) Anmeldenummer: 08865930.5
(22) Anmeldetag: 29.11.2008
(51) Int. Cl.: B65G 49/04

(54) **TAUCHBEHANDLUNGSANLAGE**
IMMERSION TREATMENT SYSTEM
INSTALLATION DE TRAITEMENT PAR IMMERSION

(30) Priorität: 28.12.2007 DE 102007063061; 21.02.2008 DE 102008010399
(43) Veröffentlichungstag der Anmeldung: 29.09.2010
(73) Patentinhaber: Eisenmann SE, 71032 Böblingen (DE)
(72) Erfinder: ALBECK, Sebastian, Puebla (MX); ESPINOSA, Antonio, Belisario, Duran, 72197 Puebla (MX); GONZALEZ, Victo, Hugo, Barragan, Puebla (MX); HANF, Jürgen, 72070 Tübingen (DE); ROBBIN, Jörg, 72119 Pfäffingen (DE)
(74) Vertreter: Ostertag & Partner Patentanwälte mbB
(86) Internationale Anmeldenummer: PCT/EP2008/010145
(87) Internationale Veröffentlichungsnummer: WO 2009/083081

(56) Entgegenhaltungen:
- EP-A- 1 319 444
- DE-A1- 2 936 925
- DE-A1- 10 306 826
- JP-A- 3 002 397
- JP-A- 2005 026 596
- US-A- 3 699 918
- US-A- 5 531 830

## Beschreibung

Die Erfindung betrifft die Verwendung einer Tauchbehandlungsanlage für Fahrzeugkarosserien mit den im Anspruch 1 angegebenen Merkmalen.

Eine Tauchbehandlungsanlage in der speziellen Form einer elektrophoretischen Tauchlackieranlage ist aus der DE 101 03 837 B4 bekannt. Hier umfasst jeder Transportwagen mindestens einen Schwenkarm, der an einem Ende um eine mit dem Transportwagen verfahrende erste Drehachse verschwenkbar ist und am anderen Ende über eine zweite Drehachse die Befestigungseinrichtung trägt, an welcher der zu lackierende Gegenstand befestigt ist. Die Bewegung, mit welcher die Fahrzeugkarosserie hier in das Tauchbecken eintaucht, kann als Überlagerung zweier Drehbewegungen um die beiden genannten Drehachsen und einer translatorischen Linearbewegung in horizontaler Richtung verstanden werden. Diese bekannte Tauchlackieranlage weist außerordentlich große Variabilität in den erzielbaren Bewegungskinematiken sowie hohe Flexibilität auf. Dies muss allerdings mit einem gewissen apparativen Aufwand erkauft werden, da die verschiedenen, die Befestigungseinrichtung und damit den zu lackierenden Gegenstand tragenden Bauelemente verhältnismäßig hohen Belastungen ausgesetzt sind.

Eine ältere Tauchlackieranlage ist in der DE 196 41 048 C2 beschrieben. Bei dieser ist die Fördereinrichtung so ausgebildet, dass die zu behandelnden Gegenstände unter Überlagerung einer reinen Translationsbewegung und einer reinen Drehbewegung um eine senkrecht zur Transportrichtung ausgerichtete Achse in die Bäder eingetaucht und aus diesen wieder herausgehoben werden. Die Drehachse muss dabei verhältnismäßig weit außerhalb der Kontur der Fahrzeugkarosserie und damit weit von deren Schwerpunkt liegen. Bei zu lackierenden Gegenständen, die ein erhebliches Gewicht aufweisen, werden hier sehr aufwändige Halterungsgestelle benötigt, da große Kräfte entstehen. Außerdem ist nur eine einzige Kinematik beim Ein- und Austauchen der Gegenstände möglich. Weitere Tauchbehandlungsanlagen für Fahrzeugkarosserien sind in der US 5 531 830 A oder der JP 03 002397 A beschrieben. Bei den dort offenbarten Tauchvorgängen gibt es keine Überlagerung einer horizontalen Linearbewegung, einer vertikalen Linearbewegung und einer Drehbewegung um die Drehachse. Das Dokument JP 03 002397 A offenbart die Merkmale des Oberbegriffs von Anspruch 1. Aufgabe der vorliegenden Erfindung ist es, eine Tauchbehandlungsanlage der eingangs genannten Art so zu verwenden, dass unter Beibehaltung einer möglichst großen Variabilität der Bewegungskinematik und Flexibilität der apparative Aufwand reduziert ist.

Diese Aufgabe wird erfindungsgemäß durch die Verwendung der Tauchbehandlungsanlage in der im Anspruch 1 genannten Art gelöst.

Erfindungsgemäß werden bei der Verwendung der Tauchbehandlungsanlage also nicht zwei Drehbewegungen und eine lineare Translationsbewegung wie bei der eingangs genannten DE 101 03 837 B4 überlagert, sondern zwei senkrecht zueinander gerichtete Linearbewegungen und eine einzige Drehbewegung. Dies hat den Vorteil, dass praktisch keine auf Biegung beanspruchten Elemente vorhanden sind; die Strukturen, welche den vertikal verfahrbaren Schlitten tragen, sowie der vertikal verfahrbare Schlitten selbst, sind im Wesentlichen nur Zugbeanspruchungen unter ihrem eigenen Gewicht sowie dem Gewicht des zu lackierenden Gegenstandes ausgesetzt. Die Drehachse kann so gelegt werden, dass sie durch den Schwerpunkt des zu lackierenden Gegenstandes oder jedenfalls in dessen Nähe verläuft, so dass die Drehbewegung um die Drehachse mit geringen Drehmomenten erfolgen kann.

Das erfindungsgemäße Konzept bedeutet nicht, dass immer alle Bewegungen des Gegenstandes aus einer Überlagerung aller Bewegungsfreiheitsgrade zusammengesetzt sein müssen. Es genügt, wenn die Vorrichtung die Möglichkeit bietet, alle drei Bewegungsfreiheitsgrade gleichzeitig zu nutzen.

Vorteilhafterweise umfasst jeder Transportwagen:
a) einen an einer Antriebsschiene motorisch verfahrbaren Antriebswagen;
b) eine an den Antriebswagen angekoppelte Tragstruktur, an welcher der Schlitten befestigt ist.

Durch diese Ausgestaltung wird es möglich, Antriebswägen und Antriebsschienen zu verwenden, wie sie aus anderen Anwendungsgebieten bekannt sind. Es lassen sich dadurch alle dort bereits eingesetzten Technologien und Steuerungsverfahren nutzen, die bestens erprobt und bewährt sind.

Dies gilt insbesondere dann, wenn die Antriebsschiene und der Antriebswagen nach Art einer herkömmlichen Elektrohängebahn ausgebildet sind.

Die Tragstruktur kann ein Tragwagen sein, welcher einen Führungsrahmen aufweist, der an mindestens einer sich in Bewegungsrichtung erstreckenden Führungsschiene geführt ist. Auf diese Weise wird der Transportwagen gegen unerwünschte Bewegungen stabilisiert. Die Führungsschiene kann einen kleineren oder größeren Teil des Gewichts des Schlittens sowie des daran befestigten Gegenstandes aufnehmen.

Bei einer besonders bevorzugten Ausführungsform der Erfindung weist der Antriebswagen mindestens eine motorisch drehbare Wickelrolle auf, auf welche mindestens ein flexibles Zugmittel auf- bzw. von dieser abwickelbar ist, dessen unteres Ende mit dem vertikal verfahrbaren Schlitten verbunden ist. Dies ist eine besonders einfache Weise, den Schlitten vertikal zu bewegen.

Alternativ kann auch der Tragwagen an einem nicht vertikal beweglichen Teil die motorisch drehbare Wickelrolle aufweisen.

Als flexible Zugmittel kommen insbesondere Tragbänder oder Ketten in Frage. Letztere können so ausgestaltet sein, dass sie sich unter Druck versteifen, sodass sie Druckkräfte übertragen können. Dann kann, falls erforderlich, der angehängte Gegenstand auch aktiv unter den Flüssigkeitsspiegel gedrückt werden, wenn er andernfalls auf der Flüssigkeit aufschwimmen würde. Entsprechende Ketten sind im Handel erhältlich.

Die Tragstruktur kann in einer alternativen Ausbildung vorteilhaft von einer in vertikaler Richtung ein- oder ausfahrbaren Teleskopeinrichtung umfasst sein, welche den Schlitten führt.

Der Motor, mit welchem das die Drehachse definierende Bauteil verdrehbar ist, ist vorzugsweise an dem Schlitten angeordnet und gemeinsam mit diesem vertikal verfahrbar. Die geometrische Relativanordnung von Drehmotor und Drehachse bleibt bei Vertikalbewegungen des Schlittens so unverändert, was die Drehmomentenübertragung erleichtert.

Wenn der Tragwagen gegenüber dem Antriebswagen um eine im Wesentlichen vertikale Achse verdrehbar ist, kann der Transportwagen auf dem Rückweg vom Ausgang der Tauchlackieranlage, wo die behandelten Gegenstände abgenommen werden, zum Eingang, wo die zu behandelnden Gegenstände aufgesetzt werden, in eine Position gebracht werden, in welcher senkrecht zur Bewegungsrichtung weniger Platz benötigt wird. Auch ist so ein weiterer Freiheitsgrad für die Bewegung des Gegenstandes verwirklicht.

Entlang des Rückführweges der Transportwagen vom Ausgang zum Eingang der Tauchbehandlungsanlage kann mindestens eine Führungsschiene verlaufen, die mit einem am Tragwagen vorgesehenen Führungsglied zusammenarbeitet. Diese Führungseinrichtung braucht nur wenige Kräfte aufzunehmen, die ausreichen, ein unkontrolliertes Pendeln des Tragwagens gegenüber dem Antriebswagen zu vermeiden.

Der Transportwagen kann derart eingerichtet sein, dass die Befestigungseinrichtung wenigstens entlang eines Abschnitts der Schiene seitlich gegenüber der Schiene versetzt förderbar ist. Auf diese Weise kann der Raum über der Befestigungseinrichtung und auch der Raum über dem daran befestigten Gegenstand in der Hinsicht freigehalten werden, dass dort insbesondere keine zum Fördern des Tansportwagens notwendigen Komponenten angeordnet sind.

Es ist günstig, wenn die Befestigungseinrichtung eine Tragstruktur mit Befestigungsmitteln umfasst, welche lediglich über eine Seitenfläche von einem weiteren Bauteil des Transportwagens getragen ist. Im Gegensatz zu bekannten Hängebahnsystemen, bei denen die Befestigungseinrichtung mit einem über und oberhalb der Befestigungseinrichtung verlaufenden Bügel gehalten ist, erfolgt die Befestigung der Befestigungseinrichtung an der Tragstruktur nur von einer Seite. Somit sind auch keine die Befestigungseinrichtung haltenden Komponenten des Transportwagens über der Befestigungseinrichtung angeordnet.

Wenn der Gegenstand von dem an der Schiene hängenden Transportwagen seitlich neben der Schiene geführt wird, besteht für den Transportwagen die Gefahr eines Verkippens in eine horizontale Richtung auf die Schiene zu, was hauptsächlich durch eine durch den Gegenstand bewirkte Kraft in horizontaler Richtung verursacht wird. Daher ist es günstig, wenn entsprechende Sicherungsmittel vorgesehen sind, welche den Transportwagen gegen ein Verkippen um eine zur Schiene parallele Kippachse sichern.

Dazu können die Sicherungsmittel eine parallel zur und unterhalb der Schiene angeordnete Stützstruktur umfassen, an welcher sich der Tragwagen abstützt.

Die Sicherungsmittel können vorteilhaft in der Art ausgebildet sein, dass sie eine am Transportwagen angebrachte, um eine vertikale Drehachse verdrehbare Führungsrolle umfassen, welche in einer dazu komplementären Führungsschiene geführt ist, wobei die Führungsschiene unterhalb der Antriebsschiene parallel zu dieser verläuft.

Ausführungsbeispiele von Tauchbehandlungsanlagen mit Eignung für die erfindungsgemäße Verwendung werden nachfolgend anhand der Zeichnung näher erläutert; es zeigen:
- Figur 1: in Seitenansicht einen Ausschnitt einer kataphoretischen Tauchlackieranlage für Fahrzeugkarosserien;
- Figuren 2 bis 8: perspektivisch verschiedene Phasen beim Eintauchen einer Fahrzeugkarosserie in das Tauchbecken der kataphoretischen Tauchlackieranlage von Figur 1;
- Figur 9: die kataphoretische Tauchlackieranlage von Figur 1, jedoch mit Haltekäfigen für zu lackierende Kleingüter bestückt;
- Figur 10: in einer Seitenansicht, ähnlich der Figur 1, ein zweites Ausführungsbeispiel einer kataphoretischen Tauchlackieranlage für Fahrzeugkarosserien;
- Figuren 11 bis 17: perspektivisch verschiedene Phasen beim Eintauchen einer Fahrzeugkarosserie in das Tauchbecken der kataphoretischen Tauchlackieranlage von Figur 10;
- Figur 18: perspektivisch einen Transportwagen, wie er zur Beförderung der zu lackierenden Gegenstände bei der Tauchlackieranlage der Figuren 10 bis 17 eingesetzt wird, während des Rückführvorganges vom Ausgang der Anlage zu deren Eingang;
- Figur 19: die Tauchlackieranlage der Figuren 10 bis 18, jedoch bestückt mit Haltekörben für zu lackierende Kleingüter;
- Figur 20: die Tauchlackieranlage der Figur 1, jedoch mit ei ner anderen Kinematik beim Durchgang der Fahrzeugkarosserien;
- Figur 21: in einer Seitenansicht, ähnlich den Figuren 1 und 10, ein drittes Ausführungsbeispiel einer kata phoretischen Tauchlackieranlage für Fahrzeugkarosserien;
- Figuren 22 und 23: perspektivisch aus unterschiedlichen Blickrichtungen einen Transportwagen mit einem Teleskoparm, wie er zur Förderung der zu lackierenden Fahrzeugkarosserien bei der Tauchlackieranlage von Figur 21 eingesetzt wird, während des Rückführvorganges vom Ausgang der Anlage zu deren Eingang;
- Figur 24: perspektivisch und in größerem Maßstab eine Detailansicht eines Antriebswagens des Transportwagens, wie er bei der kataphoretischen Tauchlackieranlage von Figur 21 eingesetzt wird, wobei ein Mechanismus zum Drehen des Teleskoparms gezeigt ist;
- Figuren 25 und 26: perspektivisch und in größerem Maßstab eine Detailansicht aus unterschiedlichen Blickrichtungen einer Seitenführung des Teleskoparms;
- Figur 27: perspektivisch eine Detailansicht in größerem Maßstab einer Befestigungseinrichtung des Transportwagens, wie er bei der Tauchlackieranlage von Figur 21 eingesetzt wird;
- Figuren 28A bis 28E: verschiedene Ansichten eines ersten Ausführungsbeispiels des Teleskoparms, wie er bei dem Transportwagen der kataphoretischen Tauchlackieranlage von Figur 21 eingesetzt wird;
- Figuren 29A bis 29E: verschiedene Ansichten eines zweiten Ausführungsbeispiels des Teleskoparms, wie er bei dem Transportwagen der kataphoretischen Tauchlackieranlage von Figur 21 eingesetzt wird;
- Figuren 30 bis 38: perspektivisch verschiedene Phasen beim Eintauchen einer Fahrzeugkarosserie in das Tauchbecken der kataphoretischen Tauchlackieranlage von Figur 21.

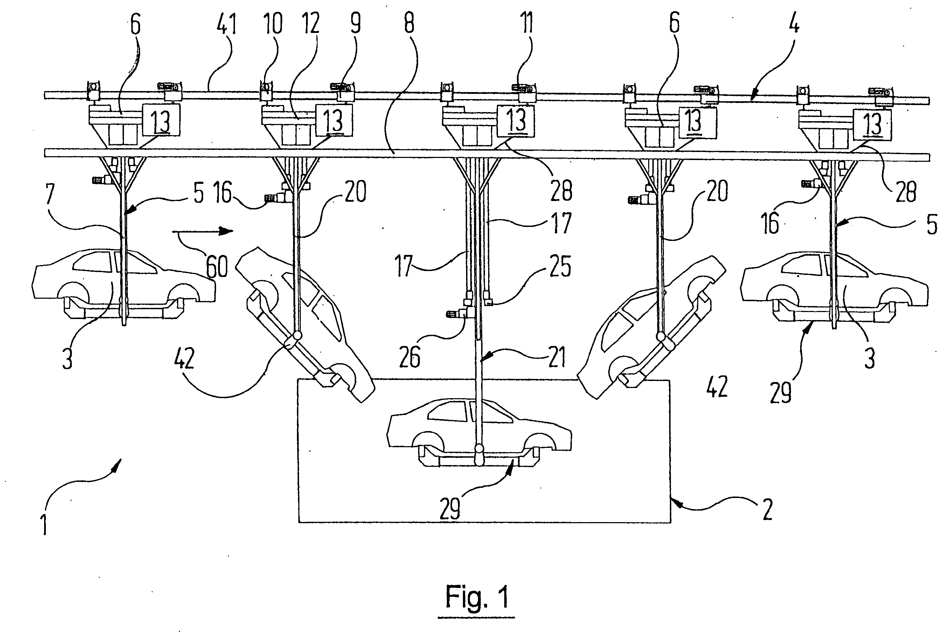

Zunächst wird auf Figur 1 Bezug genommen. Die hier dargestellte und insgesamt mit dem Bezugszeichen 1 gekennzeichnete kataphoretische Tauchlackieranlage ist ein spezielles Beispiel für eine Tauchbehandlungsanlage. Sie umfasst ein Tauchbecken 2, welches in bekannter Weise mit flüssigem Lack bis zu einem bestimmten Spiegel angefüllt ist. In einem elektrischen Feld, das sich zwischen den zu lackierenden Gegenständen, im dargestellten Ausführungsbeispiel Fahrzeugkarosserien 3, und Anoden, die entlang des Bewegungsweges der Fahrzeugkarosserien 3 angeordnet und aus Übersichtlichkeitsgründen nicht dargestellt sind, wandern die Farbpartikel auf die Fahrzeugkarosserien 3 zu und werden an diesen abgeschieden. Details dieses Vorganges sind allgemein bekannt und werden hier nicht näher erläutert.

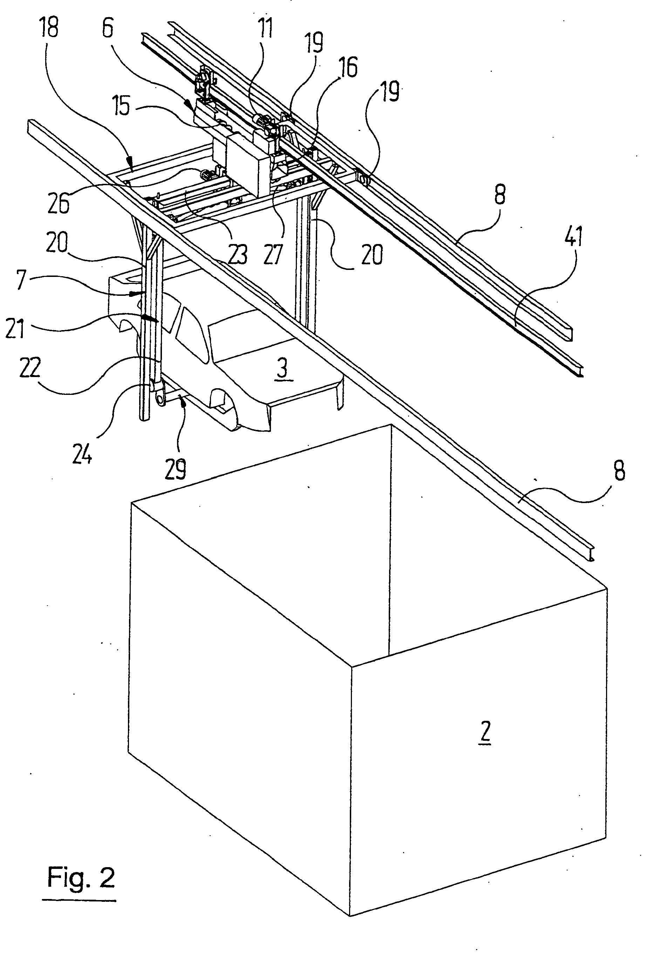

Die Fahrzeugkarosserien 3 werden mit Hilfe eines Fördersystemes 4 durch die Anlage und insbesondere durch das Tauchbecken 2 und den darin befindlichen Lack geführt. Dieses Fördersystem 4 umfasst eine Vielzahl von Transportwagen 5, die ihrerseits einen Antriebswagen 6 und einen mit diesem gekoppelten Haltewagen 7 aufweisen. Etwa mittig über dem Tauchbecken 2 erstreckt sich eine Antriebsschiene 41 mit einem I-Profil, wie sie bei herkömmlichen Elektrohängebahnen eingesetzt wird. Etwas unterhalb der Antriebsschiene 41, parallel zu dieser, verlaufen zwei Führungsschienen 8, die insbesondere in den Figuren 2 bis 8 gut erkennbar sind.

Bei den Antriebswagen 6 handelt es sich im Grundsatz um eine Konstruktion, die von herkömmlichen Elektrohängebahnen bekannt ist. Jeder dieser Antriebswagen 6 besitzt ein in Bewegungsrichtung vorauseilendes Fahrwerk 9, in der Fachsprache "Vorläufer" genannt, sowie ein in Bewegungsrichtung nacheilendes weiteres Fahrwerk 10, welches in der Fachsprache "Nachläufer" genannt wird. Vorläufer 9 und Nachläufer 10 sind in bekannter Weise mit Führungs- und Tragrollen (nicht dargestellt) ausgestattet, die an verschiedenen Flächen des I-förmigen Profils der Antriebsschiene 7 abrollen. Mindestens eine der Rollen des Vorläufers 9 dient als Antriebsrolle und ist hierzu durch einen Elektromotor 11 drehbar.

Vorläufer 9 und Nachläufer 10 jeden Antriebswagens 6 sind durch eine Verbindungsstruktur 12 miteinander verbunden. Diese trägt wiederum in bekannter Weise eine Steuereinrichtung 13, welche mit der zentralen Steuerung der Tauchlackieranlage 1 und ggfs. mit den Steuerenrichtungen 13 der anderen in der Tauchlackieranlage 1 vorhandenen Antriebswägen 6 kommunizieren kann. Auf diese Weise ist eine weitgehend unabhängige Bewegung der verschiedenen Transportwagen 5 möglich. Zwischen dem Vorläufer 9 und dem Nachläufer 10 jeden Antriebswagens 6 erstreckt sich eine Welle 14, die nur in den Figuren 2 bis 8 zu erkennen ist und auf der zwei Wickelrollen 15 drehschlüssig befestigt sind. Die Welle 14 ist an ihren gegenüberliegenden Enden in der Verbindungsstruktur 12 im Bereich des Vorläufers 9 und des Nachläufers 10 gelagert und lässt sich von einem Wickelmotor 16 in Drehung versetzen, der erneut nur in den Figuren 2 bis 8 dargestellt und im Bereich des Vorläufers 9 an der Verbindungsstruktur 12 befestigt ist. Durch Verdrehen der Welle 14 mit Hilfe des Wickelmotors 16 lassen sich zwei Tragbänder 17 auf den Wickelrollen 15 aufwickeln bzw. von diesen abwickeln, auf deren Funktion weiter unten eingegangen wird.

Jeder Tragwagen 7 umfasst einen Führungsrahmen 18 in Form eines Rechteckes, dessen längere Seite senkrecht zur Bewegungsrichtung verläuft. Die Schmalseiten des Führungsrahmens 18 tragen an ihren gegenüberliegenden Enden Führungsrollen 19, welche an den Innenflächen des C-förmigen Profiles der beiden Führungsschienen 8 ablaufen. Etwa im mittleren Bereich dieser beiden Schmalseiten ist jeweils eine senkrecht nach unten verlaufende Führungsschiene 20 befestigt. An diesen Führungsschienen 20 ist ein Schlitten 21 vertikal beweglich geführt. Der Schlitten 21 ist ebenfalls im Wesentlichen rechteckig; seine beiden vertikalen Seiten werden von hohlen Führungsprofilen 22 gebildet, die an ihren oberen Enden durch eine Quertraverse 45 miteinander verbunden sind.

An den jeweils unteren Enden der beiden Führungsprofile 22 ist jeweils ein Drehzapfen 24 gelagert, welche koaxial ausgerichtet sind und auf diese Weise eine Drehachse definieren.

An der Unterseite der oberen Quertraverse 45 des Schlittens 21, etwa in deren Mitte unterhalb der Antriebsschiene 7, ist ein kurzer Längsträger 25 angebracht, der in den Figuren sichtbar ist und an dem die unteren Enden der Tragbänder 17 festgelegt sind. Der Längsträger 25 trägt außerdem einen Getriebemotor 26, dessen Ausgangswelle über zwei Transmissionseinrichtungen 27 mit den aussenliegenden Enden der Drehzapfen 24 verbunden ist. Die Transmissionseinrichtungen 27 umfassen jeweils eine Gelenkwelle, die sich vom Getriebemotor 26 zu einem der beiden hohlen Führungsprofile 22 erstreckt und dort an einen nicht dargestellten Antriebsmechanismus gekoppelt ist, der innerhalb des hohlen Führungsprofiles 22 nach unten verläuft und an dessen unterem Ende mit der Drehwelle 24 gekoppelt ist. Durch Betätigen des Getriebemotors 26 lassen sich auf diese Weise die Drehzapfen 24 in beiden Drehrichtungen verdrehen.

An der Außenseite der Führungsprofile 22 sind jeweils Rollen angebracht, welche von innen her in die Führungsschienen 20 eingreifen, so dass der Führungsschlitten 21 reibungsarm zwischen den Führungsschienen 20 vertikal verfahrbar ist.

Jeder Antriebswagen 6 ist mit dem zugehörigen Tragwagen 7 durch eine schräg verlaufende Antriebsstange 28 verbunden, die an ihrem unteren Ende gelenkig mit einer Quertraverse 23 des Führungsrahmens 18 und an ihrem oberen Ende mit der Verbindungsstruktur 12 des Antriebswagens 6 im Bereich des Vorläufers 9 gelenkig befestigt ist.

An den Drehzapfen 24 ist jeweils über zwei Laschen 42 eine insgesamt mit dem Bezugszeichen 29 versehene Befestigungseinrichtung festgelegt, an welcher in bekannter Weise eine zu lackierende Fahrzeugkarosserie 3 lösbar befestigt werden kann. Die Abmessungen der Laschen 42 sind dabei so, dass die gemeinsame Achse der Drehzapfen 24 zumindest annähernd durch den Schwerpunkt der Fahrzeugkarosserie 3 verläuft.

Die Funktionsweise der oben beschriebenen kataphoretischen Tauchlackieranlage 1 ist folgende:

Die zu lackierenden Fahrzeugkarosserien 3 werden in Figur 1 von links her in im Wesentlichen horizontaler Ausrichtung (Pfeil 60) von einer Vorbehandlungsstation zugeführt, in welcher die Fahrzeugkarosserien 3 in bekannter Weise durch Reinigen, Entfetten usw. auf den Lackiervorgang vorbereitet werden. Der Schlitten 21 ist dabei in seine oberste Position verfahren, in der die Tragbänder 17 entsprechend auf die Wickelrollen 15 aufgewickelt sind. Die entsprechende Position ist perspektivisch in Figur 2 zu erkennen. Der Antriebswagen 6 des entsprechenden Transportwagens 5 wird mit Hilfe des Elektromotors 11 entlang der Antriebsschiene 41 auf das Tauchbecken 2 zugeführt, wobei der zugehörige Tragwagen 7 mit Hilfe der Antriebsstange 28 nachgezogen wird. Dabei rollen die Führungsrollen 19 des Tragwagens 7 an den entsprechenden Flächen der Führungsschienen 8 ab.

Zu welchem Anteil das Gewicht des Tragwagens 7 und der daran befestigten Fahrzeugkarosserie 3 über die Tragbänder 17 und damit letztendlich von der Antriebschiene 41 einerseits und über die Führungsschienen 8 andererseits aufgenommen wird, kann nach Zweckmäßigkeitsgründen entschieden werden. Grundsätzlich ist es sowohl denkbar, dieses Gewicht ausschließlich über die Antriebsschiene 41 als auch ausschließlich über die Führungsschienen 8 als auch gemischt über die Antriebsschiene 41 und über die Führungsschienen 8 aufzunehmen.

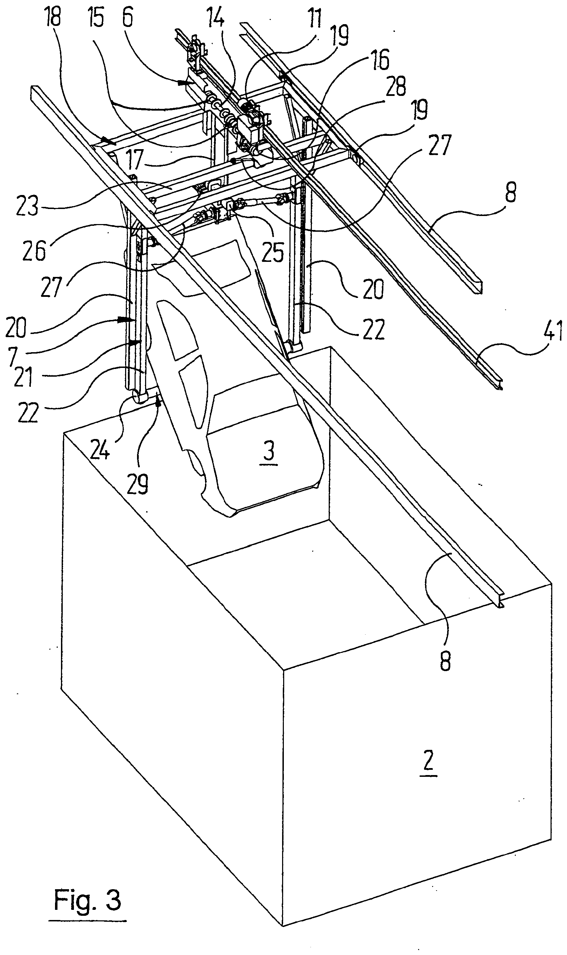

Wenn sich der Transportwagen 5 der auf der Eintrittsseite befindlichen Stirnwand des Tauchbeckens 2 nähert, wird der Schlitten 21, an dem sich die Fahrzeugkarosserie 3 befindet, progressiv abgesenkt, indem mit Hilfe des Wickelmotors 16 die Tragbänder 17 entsprechend von den Wickelrollen 15 abgespult werden. Sobald die Front der Fahrzeugkarosserie 3 über die Stirnwand des Tauchbeckens 2 hinaus ins Innere des Tauchbeckens 2 ragt, werden gleichzeitig mit Hilfe des Getriebemotors 26 die Drehzapfen 24 und damit die ganze Befestigungseinrichtung 29 samt Fahrzeugkarosserie 3 verdreht. In diesem Bereich ist also die Gesamtbewegung der Fahrzeugkarosserie 3 als Überlagerung dreier Bewegungen zu verstehen, nämlich einer horizontalen Linearbewegung (Pfeil 60) entlang der Schienen 7, 8, einer vertikalen Linearbewegung entlang der Führungsschienen 20 und einer Drehbewegung in der Sicht der Figur 1 im Uhrzeigersinn um die Achse der Drehzapfen 24. Dabei "wickelt" sich die Fahrzeugkarosserie 3 über die eingangsseitige Stirnwand des Tauchbeckens 2. Die entsprechende Position ist perspektivisch in Figur 3 dargestellt.

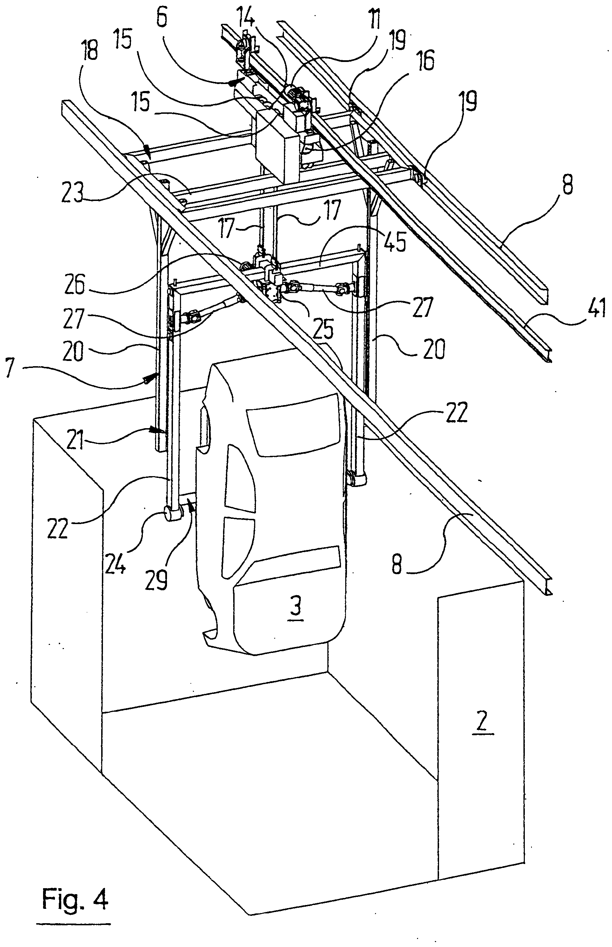

Unter fortgesetztem Absenken des Schlittens 21 und fortgesetzter Drehung der Fahrzeugkarosserie 3 um die Achse der Drehzapfen 24 wird schließlich eine Position erreicht, in welcher die Fahrzeugkarosserie 3 im Wesentlichen senkrecht steht, wie dies in Figur 4 dargestellt ist. Dabei befindet sich die Fahrzeugkarosserie 3 noch verhältnismäßig nahe an der eingangsseitigen Stirnwand des Tauchbeckens 2. In dem Ausmaße, in dem sich der Transportwagen 5 weiterbewegt und damit der Abstand zwischen der Mitte der Fahrzeugkarosserie 3 und der eingangsseitigen Stirnwand des Tauchbeckens 2 wächst, werden die Drehzapfen 24 und damit die Fahrzeugkarosserie 3 weiter im Uhrzeigersinne verdreht, so dass sich die Fahrzeugkarosserie 3 auf den Rücken zu legen beginnt. Die Bewegungsgeschwindigkeit in horizontaler Richtung und die Drehgeschwindigkeit können dabei so aufeinander abgestimmt werden, dass die Front der Fahrzeugkarosserie 3 bei dieser Eintauchbewegung etwa denselben Abstand von der eingangsseitigen Stirnseite des Tauchbeckens 2 behält.

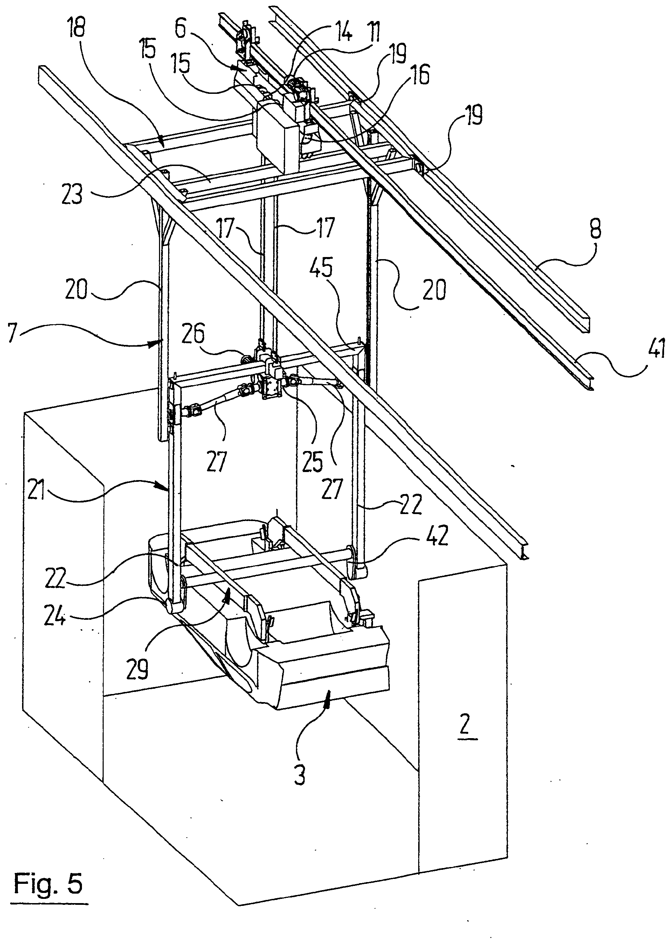

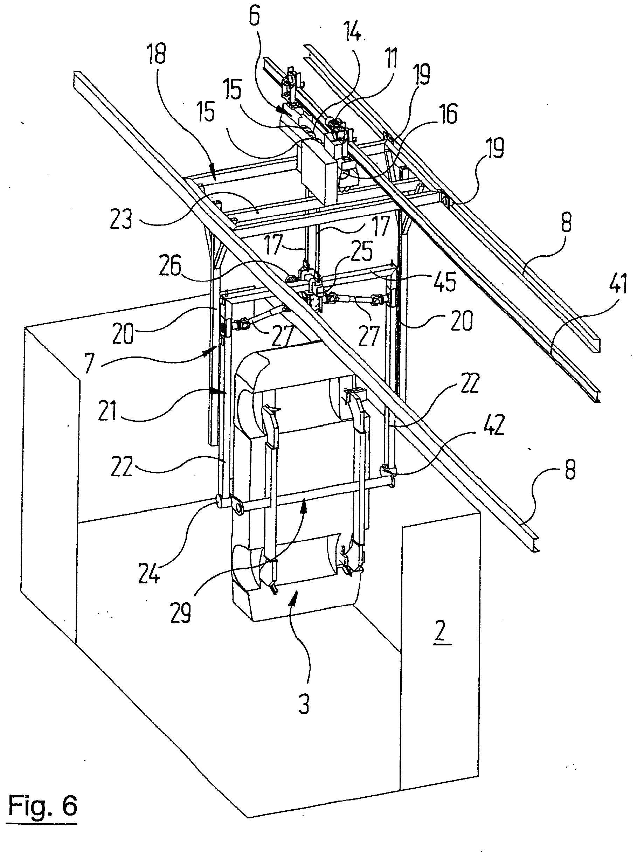

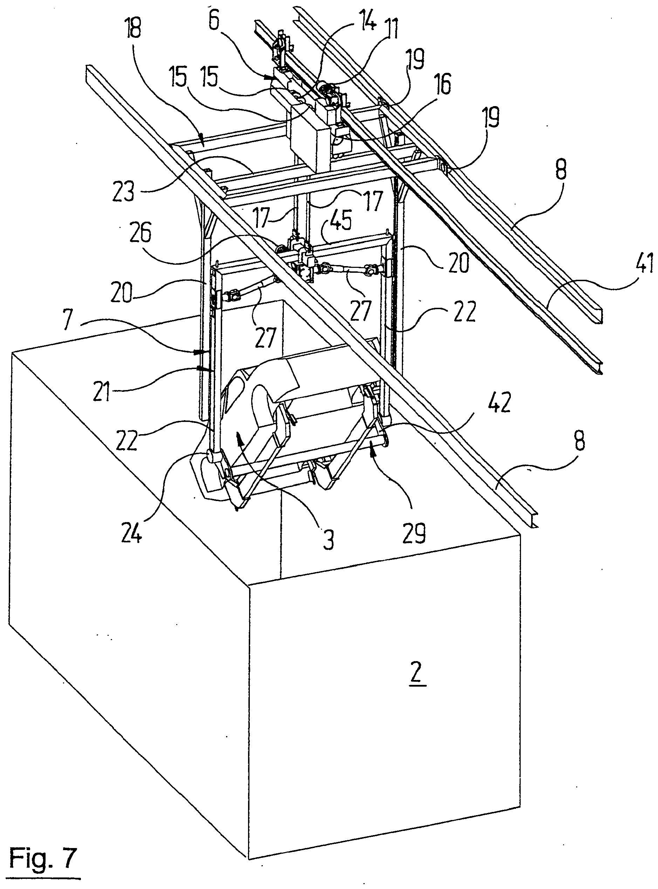

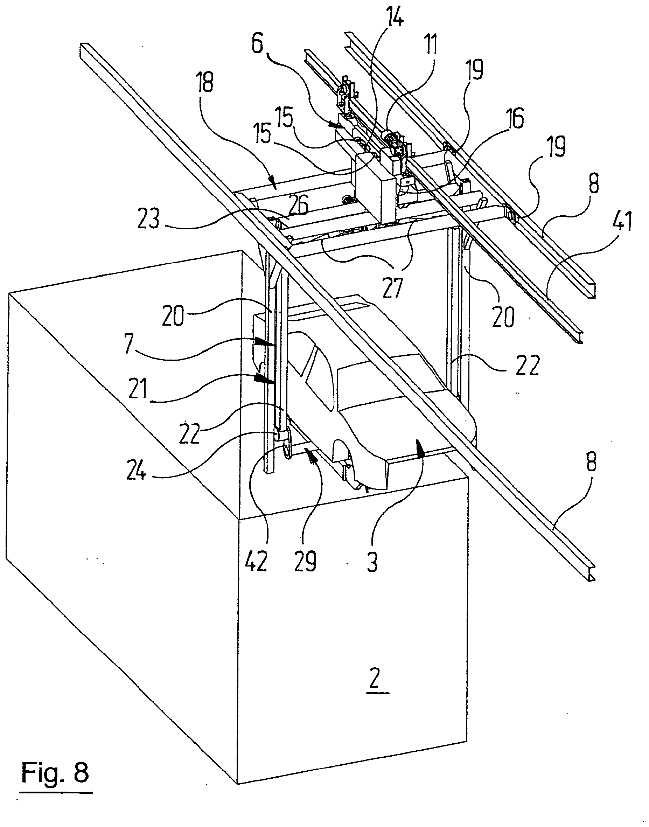

Spätestens in dem Moment, in welchem die Fahrzeugkarosserie 3 vollständig "auf dem Rücken" und damit wieder horizontal liegt und der in Figur 5 dargestellt ist, ist die Fahrzeugkarosserie 3 vollständig in den flüssigen Lack eingetaucht. Die Fahrzeugkarosserie 3 wird zunächst in dieser Position mit Hilfe des Transportwagens 5 weiter durch das Tauchbecken 2 befördert, bis sie näher an die ausgangsseitige Stirnwand des Tauchbeckens 2 herangerückt ist. Sodann beginnt der Austauchvorgang der Fahrzeugkarosserie 3. Dieser stellt sich wiederum als Überlagerung von drei Bewegungen dar, nämlich der horizontalen Linearbewegung in Förderrichtung 60, der Vertikalbewegung entlang der Führungsschienen 20 und der Drehbewegung um die Achse der Drehzapfen 24. Zunächst wird die Fahrzeugkarosserie 3, wie in Figur 6 dargestellt, durch Weiterverdrehen der Drehzapfen 24 im Uhrzeigersinn vertikal gestellt. Sodann "wickelt" sich die Fahrzeugkarosserie 3 unter Hochziehen des Schlittens 21 und Fortsetzung der Drehbewegung über die ausgangsseitige Stirnwand des Tauchbeckens 2 weg (vgl. Figur 7), bis dann erneut in Förderrichtung 60 hinter dem Tauchbecken 2 eine horizontale Position der frisch lackierten Fahrzeugkarosserie 3 erreicht ist, die in Figur 8 gezeigt ist.

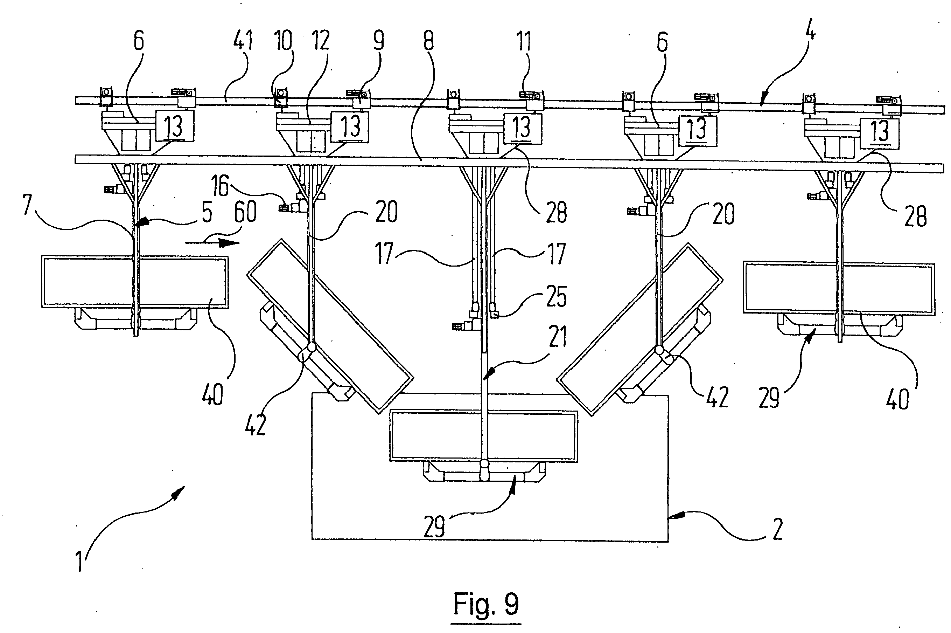

Der geschilderte Bewegungsablauf der Fahrzeugkarosserie 3 beim Durchgang durch das Tauchbecken 2 ist nur beispielhaft. Die konstruktive Ausgestaltung des Transportwagens 5 lässt eine Vielzahl anderer Kinematiken zu, die jeweils an die Art der Fahrzeugkarosserie 3 angepasst werden können. Die beschriebene Tauchlackieranlage 1 kann auch zum Tauchlackieren kleinerer Gegenstände (Kleingüter) verwendet werden, wie dies schematisch in Figur 9 gezeigt ist. Statt der Fahrzeugkarosserien 3 sind dort Haltekörbe 40 an der Befestigungseinrichtung 29 der Transportwagen 5 festgemacht, welche die (nicht dargestellten) kleinteiligen, zu lackierenden Gegenstände beispielsweise in loser Schüttung enthalten. Diese Haltekörbe 40, welche ein Eindringen des flüssigen Lackes gestatten, werden in ähnlicher Weise durch den flüssigen Lack im Tauchbecken 2 geführt, wie dies oben für die Fahrzeugkarosserien 3 beschrieben wurde. Allerdings werden die Haltekörbe 40 nicht "auf den Rücken" gelegt. Sie erreichen ihre in Figur 9 mittlere Position im Tauchbecken 2, in der sie erneut horizontal ausgerichtet sind, durch eine gegen den Uhrzeigersinn gerichtete Drehbewegung, so dass also die Oberseite der Haltekörbe 40 nach dem Eintauchen in den Lack weiterhin nach oben zeigt. Auf diese Weise ist es möglich, die Oberseite der Haltekörbe 40 offen zu lassen, ohne dass der Inhalt der Haltekörbe 40 herausfallen könnte. Dies ist beim Beschicken und Entleeren der Haltekörbe 40 von Vorteil.

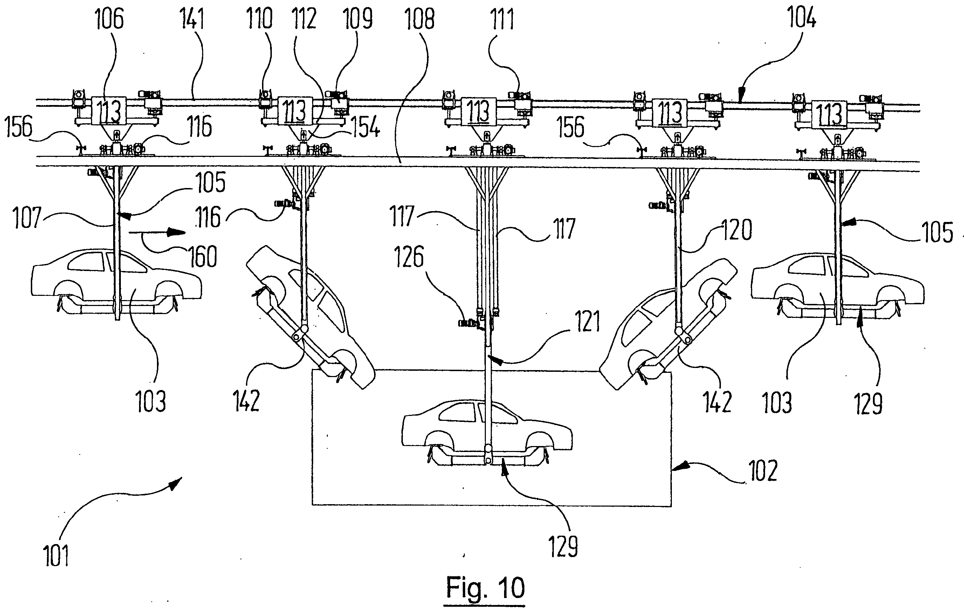

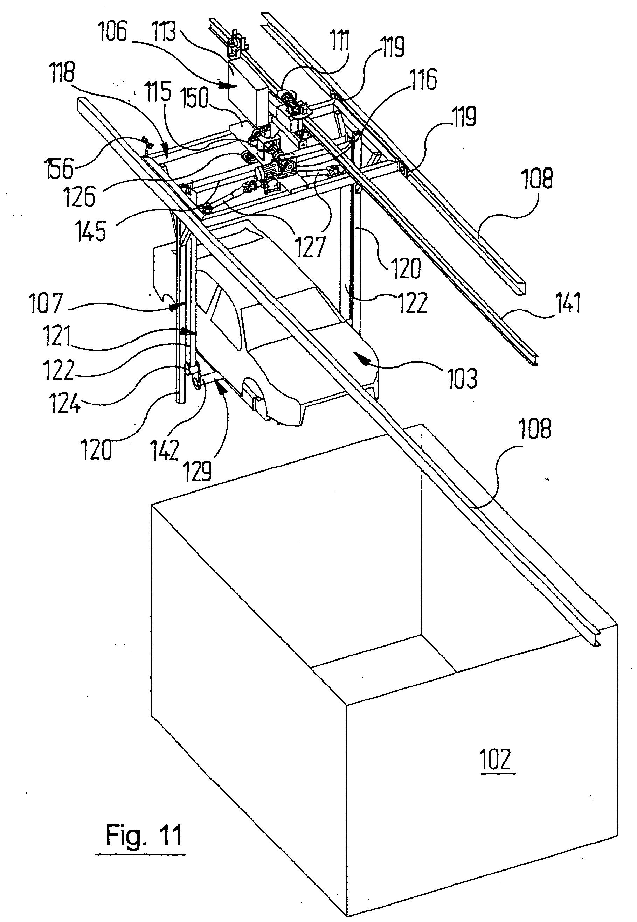

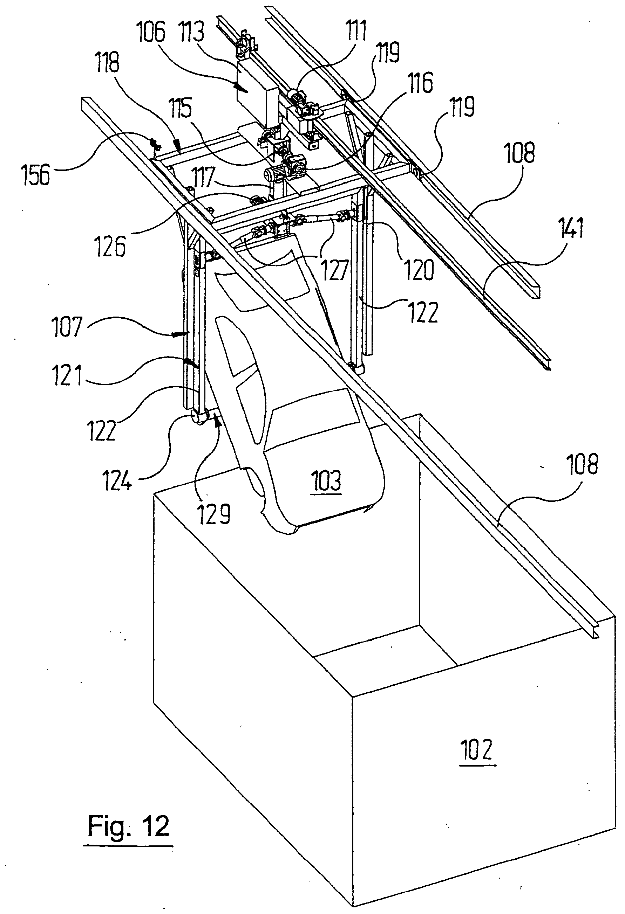

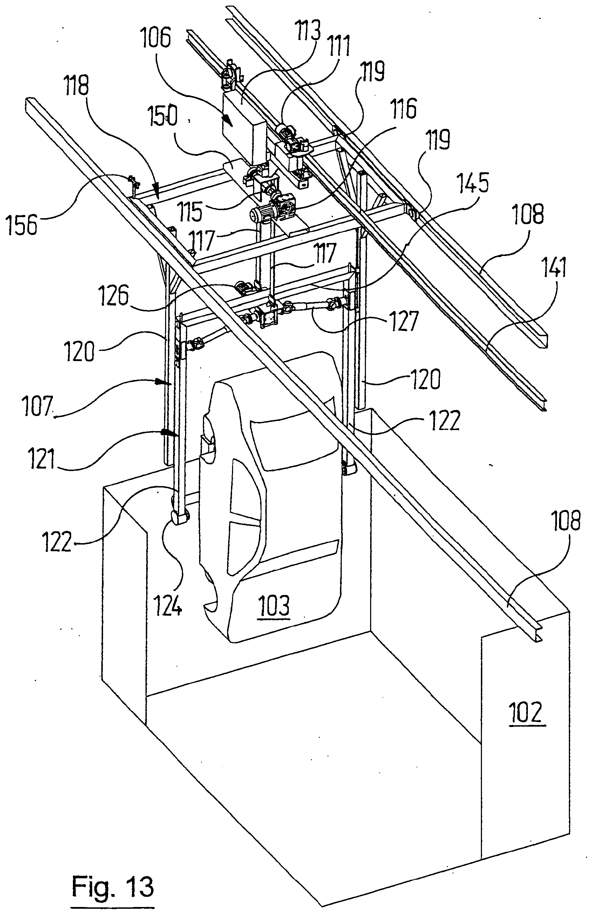

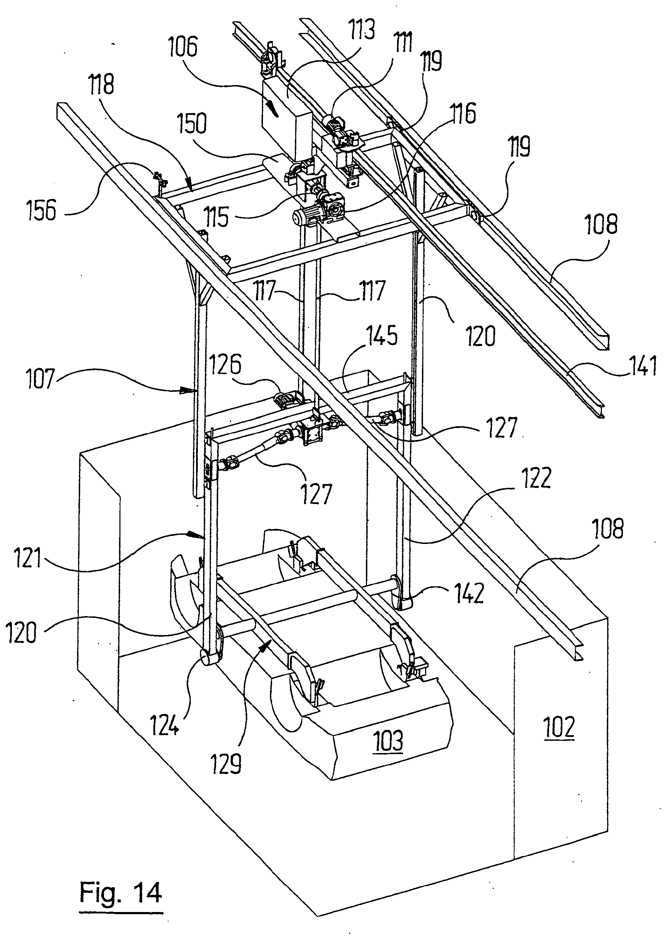

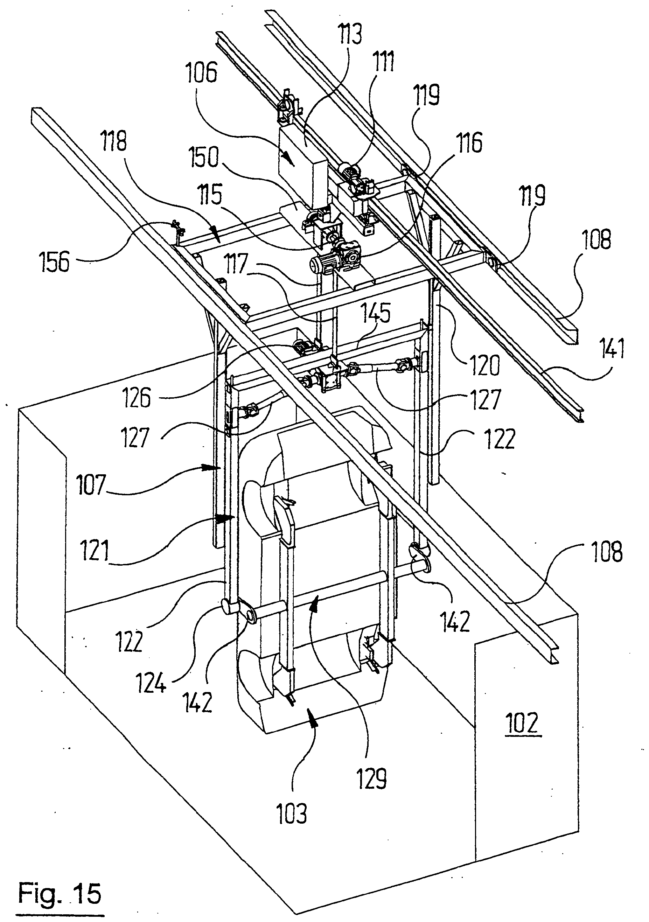

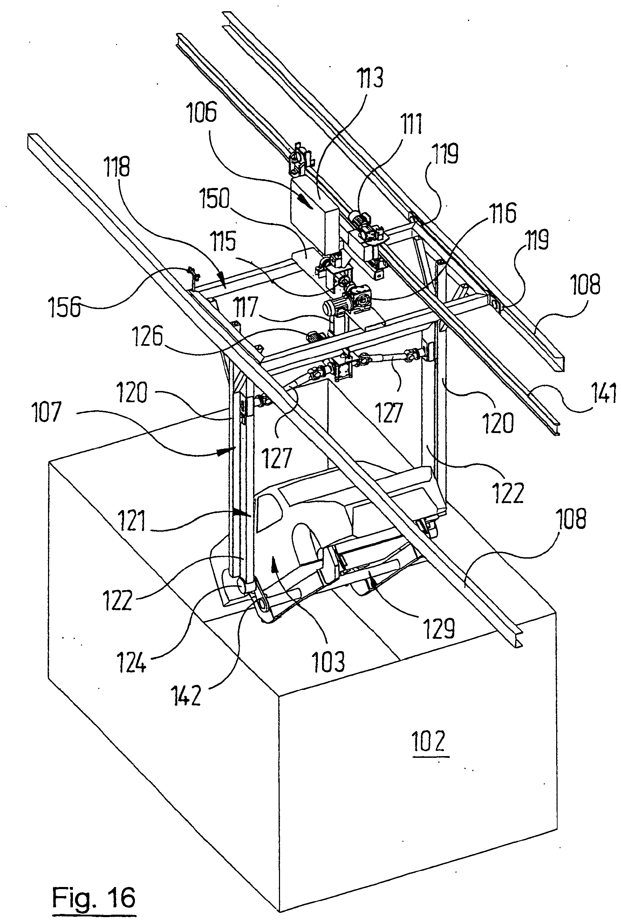

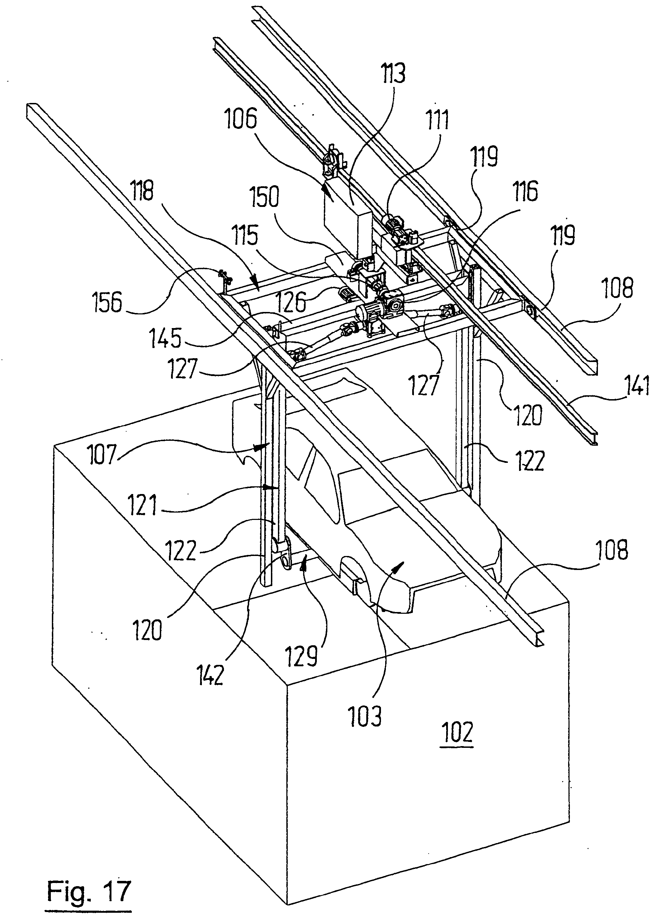

In den Figuren 10 bis 19 ist ein zweites Ausführungsbeispiel einer kataphoretischen Tauchlackieranlage dargestellt, die dem oben anhand der Figuren 1 bis 9 beschriebenen Ausführungsbeispiel sehr ähnlich ist. Entsprechende Teile tragen daher dasselbe Bezugszeichen zuzüglich 100. Die nachfolgende Beschreibung beschränkt sich auf die Unterschiede, die zwischen den beiden Ausführungsbeispielen gegeben sind.

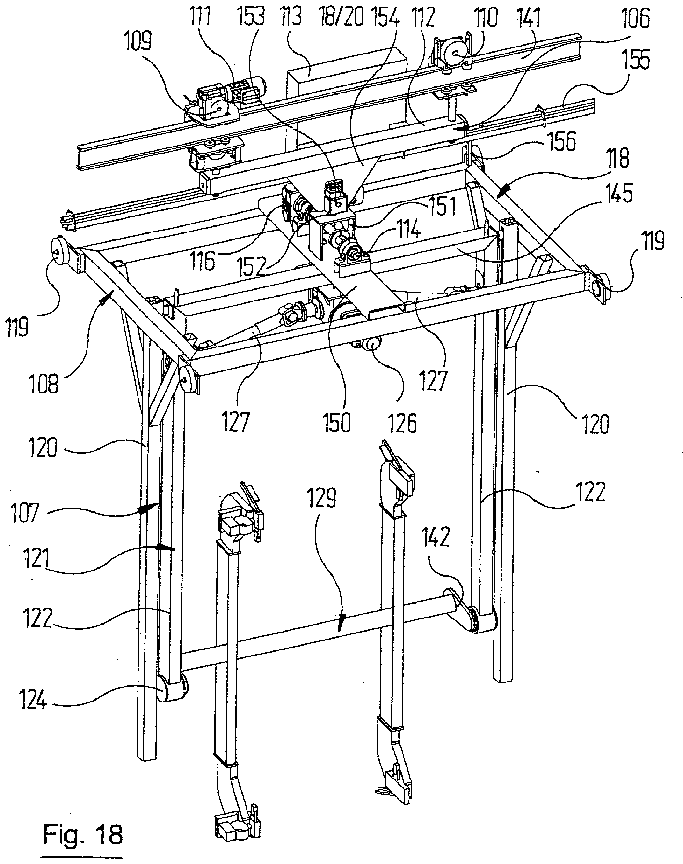

Das Ausführungsbeispiel nach den Figuren 10 bis 19 zeichnet sich insbesondere dadurch aus, dass der Tragwagen 107 jedes Transportwagens 105 gegenüber den zugehörigen Antriebswagen 106 um eine vertikale Achse verdrehbar ist. Der Sinn dieses Konstruktionsmerkmals wird weiter unten deutlich. Dieser zusätzliche Drehfreiheitsgrad, der beim Ausführungsbeispiel der Figuren 1 bis 9 nicht vorhanden ist, wird durch folgende konstruktive Maßnahmen ermöglicht, die besonders gut in Figur 18 zu erkennen sind:

In der Mitte zwischen den Schmalseiten des Führungsrahmens 119 ist an den beiden langen Seiten eine Längstraverse 150 befestigt. Auf dieser Längstraverse 150 ist die Welle 114 gelagert, die beim Ausführungsbeispiel der Figur 1 an der Verbindungsstruktur 12 des Antriebswagens 6 befestigt war. Auch der Wickelmotor 116 ist an der Oberseite der Längstraverse 150 angeordnet. Ebenfalls befestigt auf der Oberseite der Längstraverse 150 ist eine portalartige Mitnehmerstruktur 151, welche die Welle 114 überbrückt und an deren Oberseite das untere Ende eines Drehzapfens 152 befestigt ist, der in den Figuren selbst nur schwer zu erkennen ist. Der Drehzapfen 152 seinerseits ist in einem Lager 153 gelagert, das in einer Ausnehmung einer etwa dreieckigen Mitnahmeplatte 154 an der Unterseite der Verbindungsstruktur 112 des Antriebswagens 106 befestigt ist. Nicht in der Zeichnung sichtbar ist ein Antriebsmotor, mit dessen Hilfe der Drehzapfen 152 um seine Achse verdreht werden kann.

An einem Eck des Führungsrahmens 118 ist ein nach oben ragendes Führungsglied 155 befestigt, welches besonders deutlich in den Figuren 10 bis 17 und 19 zu erkennen ist und dessen Funktion weiter unten deutlich wird.

Die Funktion des zweiten Ausführungsbeispieles der Tauchlackieranlage 101 ist folgende:

Der Durchgang der Fahrzeugkarosserien 103 durch das Tauchbecken 102, der in den Figuren 10 bis 17 dargestellt ist, geschieht in derselben Weise, wie dies oben anhand der Figuren 1 bis 8 für das erste Ausführungsbeispiel beschrieben ist. Der Drehzapfen 152, welcher den Antriebswagen 106 mit dem Tragwagen 107 verbindet, ist dabei vorzugsweise in dem Lager 153 verriegelt; die Ausrichtung des Führungsrahmens 118 ist so, dass seine Schmalseiten den Führungsschienen 108 benachbart sind und die Führungsrollen 119 in die Führungsschienen 118 eingreifen.

Der zusätzliche Drehfreiheitsgrad, den die Transportwagen 105 beim zweiten Ausführungsbeispiel besitzen, wird erst relevant, wenn die Fahrzeugkarosserien 103 das Tauchbad verlassen haben und von den Transportwagen 105 zur weiteren Bearbeitung abgenommen sind. Die Transportwagen 205 müssen dann wieder zum Eingang der Tauchlackieranlage 101 zurückgeführt werden, damit sie dort erneut mit noch zu lackierenden Fahrzeugkarosserien 103 beladen werden können. Hierzu verlassen die Führungsrahmen 118 der Transportwagen 105 die Führungsschienen 108, die an einer entsprechenden Stelle einfach enden können. Nunmehr kann der Tragwagen 107 gegenüber dem Transportwagen 105 um 90° motorisch um die vertikale Achse des Drehzapfens 152 verdreht werden, so dass nunmehr die Längsseiten des rechteckigen Führungsrahmens 118 parallel zur Bewegungsrichtung stehen, wie dies in Figur 18 dargestellt ist. Das Führungsglied 155 an der Oberseite des Führungsrahmens 119 kommt dabei in Eingriff mit einer (einzelnen) Führungsschiene 156, die sich parallel zur weitergeführten Antriebsschiene 107 entlang des Rückführweges der Transportwagen 105 erstreckt. Durch den wechselseitigen Eingriff des Führungsgliedes 155 und der Führungsschiene 156 werden ungewünschte und unkontrollierte Bewegungen des Tragwagens 107 gegenüber dem Antriebswagen 106 unterbunden.

Durch die Drehung des Tragwagens 107 gegenüber dem Antriebswagen 106 wird der Platzbedarf für den Transportwagen 105 auf dem Rückweg vom Ausgang der Tauchlackieranlage 101 zu deren Eingang verringert. Diese Platzersparnis ist um so größer, um so kürzer die Schmalseiten des rechteckigen Führungsrahmens 119 sind.

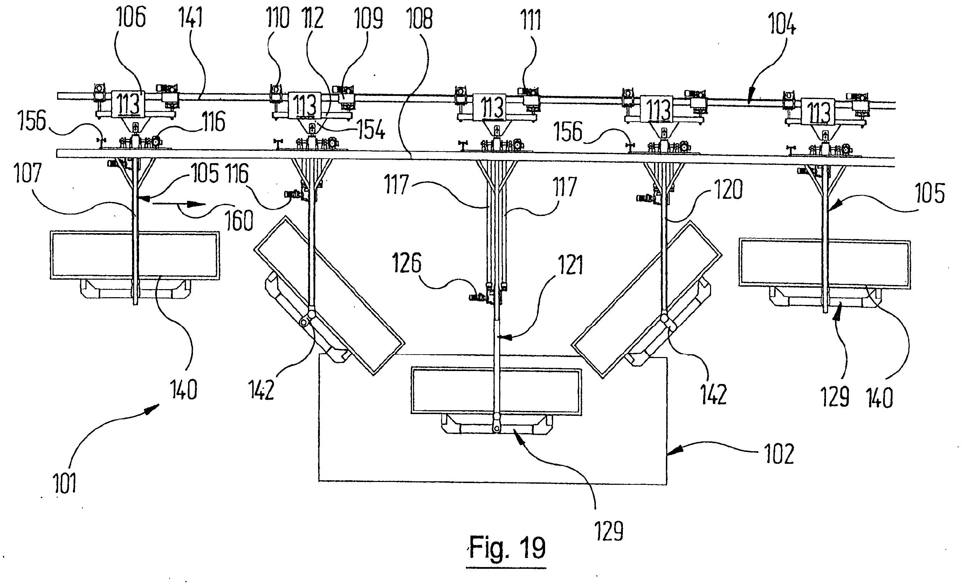

Selbstverständlich kann auch die zweite Ausführungsform einer Tauchlackieranlage 101 statt mit Fahrzeugkarosserien 103 mit Haltekörben 140 für kleinteilige, zu lackierende Gegenstände versehen werden, wie dies schematisch in Figur 19 gezeigt ist.

Bei beiden oben beschriebenen Ausführungsbeispielen wurden zum Translationsantrieb (Linearbewegung in horizontaler Richtung gemäß Pfeil 60 in Figur 1) als Antriebswagen 6; 106 im Wesentlichen herkömmliche Antriebswagen von Elektrohängebahnen eingesetzt. Diese haben den Vorteil einer besonders großen Variabilität im Betrieb, das sie unabhängig voneinander verfahren, angehalten, ggfs. auch in ihrer Bewegungsrichtung umgekehrt werden können, wobei die erforderlichen Steuerungsmittel entwickelt und bewährt sind. Selbstverständlich können für die Tragwagen 7; 107 aber auch andere Antriebseinrichtungen vorgesehen werden, wobei grundsätzlich alle Fördermittel in Betracht kommen, an denen die Tragwagen 7; 107 nach unten abgehängt werden können.

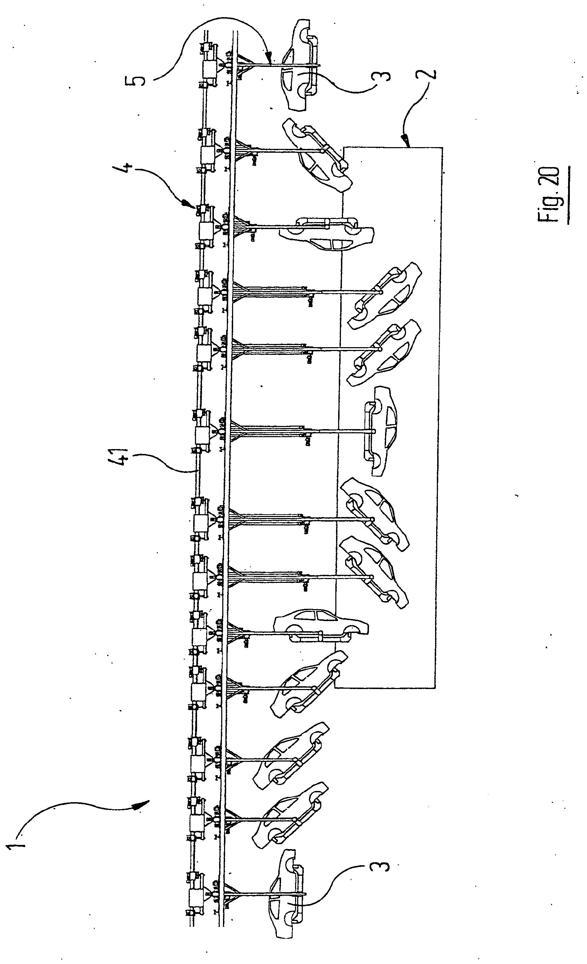

Die oben anhand der Figuren 1 bis 19 beschriebene Arten, die Fahrzeugkarosserien 3; 103 durch das Tauchbecken 2; 102 zu führen, ist nur ein Beispiel für viele unterschiedliche Kinematiken, die mit der Tauchlackieranlage 1; 101 realisiert werden können. Ein anderes Beispiel ist schematisch in Figur 20 gezeigt. Hier werden die zugeführten Fahrzeugkarosserien 3 schon in einer gewissen Entfernung von dem Tauchbecken 2 unter einem Winkel von etwa 45° gegenüber der Horizontalen schräg gestellt. Das "Wickeln" der Fahrzeugkarosserie 3 über die eingangsseitige Stirnwand des Tauchbeckens 2 geschieht dann aus dieser Schräglage ähnlich wie in Figur 1. Bevor jedoch die horizontale Rückenlage der Fahrzeugkarosserien 3 erreicht wird, werden diese eine gewisse Strecke erneut unter einem Winkel von etwa 45° gegenüber der Horizontalen verfahren, ebenso nach dem Durchlaufen der horizontalen Rückenlage vor dem Austauchen. Sinn dieser Schrägstellung ist eine Verkürzung der Anlage in Förderrichtung.

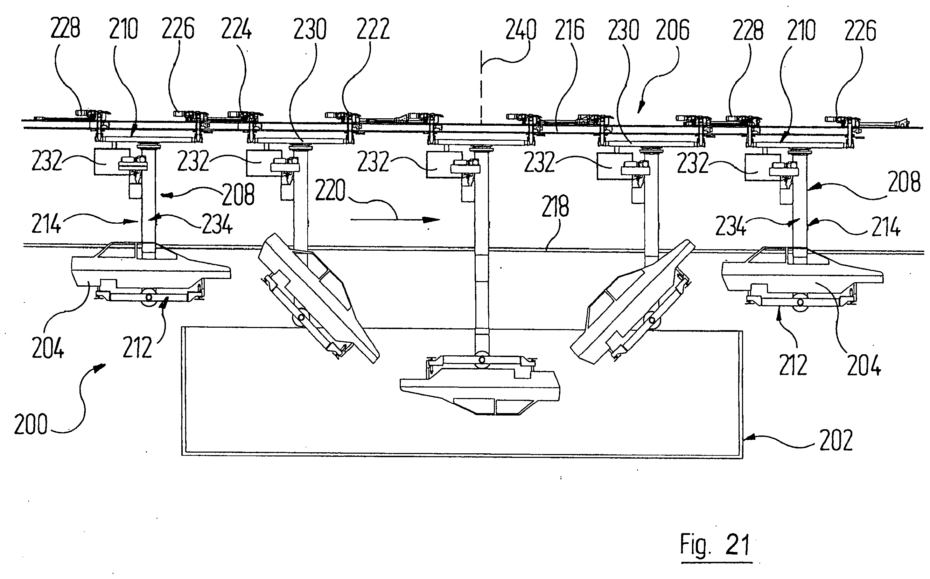

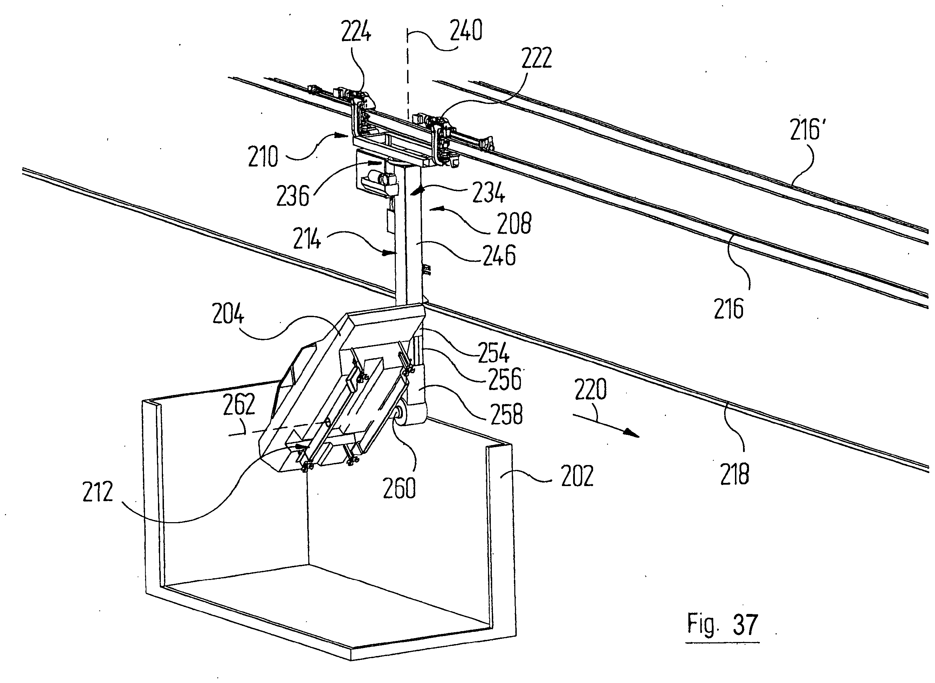

In den Figuren 21 bis 38 ist als drittes Ausführungsbeispiel eine kataphoretische Tauchlackieranlage 200 dargestellt. Diese umfasst ein mit flüssigem Lack gefülltes Tauchbecken 202. Den Ausführungsbeispielen nach den Figuren 1 bis 19 entsprechend, wandern Farbpartikel in einem elektrischen Feld, das sich zwischen Fahrzeugkarosserien 204 und Anoden ausbildet, die entlang des Bewegungsweges der Fahrzeugkarosserien 204 angeordnet und aus Übersichtlichkeitsgründen nicht dargestellt sind, auf die Fahrzeugkarosserien 204 zu und werden an diesen abgeschieden.

Die Fahrzeugkarosserien 204 werden mit Hilfe eines Fördersystems 206 durch die Anlage und insbesondere durch das Tauchbecken 202 und den darin befindlichen Lack geführt. Das Fördersystem 206 umfasst eine Vielzahl von Transportwagen 208, die ihrerseits einen Antriebswagen 210 und einen Tragwagen 212 aufweisen, welche über eine weiter unten noch im Detail erläuterte Teleskopeinrichtung 214 miteinander gekoppelt sind.

Über dem Tauchbecken 202 erstreckt sich eine Antriebsschiene 216 mit einem I-Profil, wie sie bei herkömmlichen Elektrohängebahnen eingesetzt wird. Unterhalb der Antriebsschiene 216 und oberhalb des Tauchbeckens 202 verläuft parallel zur Antriebsschiene 216 eine Führungsschiene 218 mit einem nach oben offenen U-Profil.

Die Bewegungsrichtung, in welcher die Fahrzeugkarosserien 204 mittels des Fördersystems 206 gefördert werden, ist in Figur 21 durch einen Pfeil 220 dargestellt. Die Antriebsschiene 216 und die Führungsschiene 218 sind bezogen auf die Mitte des Tauchbeckens 202 in Richtung senkrecht zur Bewegungsrichtung 220 nach außen versetzt, wobei die Führungsschiene 218 weiter außen verläuft als die Antriebschiene 216.

Bei den Antriebswagen 210 handelt es sich im Grundsatz um eine Konstruktion, die von herkömmlichen Elektrohängebahnen her bekannt ist. Jeder dieser Antriebswagen 210 besitzt ein in Bewegungsrichtung 220 vorauseilendes Fahrwerk 222, in der Fachsprache "Vorläufer" genannt, sowie ein in Bewegungsrichtung 220 nacheilendes weiteres Fahrwerk 224, welches in der Fachsprache "Nachläufer" genannt wird. Vorläufer 222 und Nachläufer 224 sind in bekannter Weise mit Führungs- und Tragrollen ausgestattet, die hier nicht eigens mit einem Bezugszeichen versehen sind und an verschiedenen Flächen des I-förmigen Profils der Antriebsschiene 216 abrollen. Mindestens eine der Rollen des Vorläufers 222 bzw. des Nachläufers 224 dient als Antriebsrolle und ist hierzu durch einen Elektromotor 226 bzw. 228 drehbar. Gegebenenfalls kann es ausreichen, wenn lediglich der Vorläufer 222 angetrieben ist. Der über den Antriebswagen 210 angetriebene Transportwagen 208 kann gegebenenfalls auch Steigungen überwinden, wenn die Antriebsschiene 216 in bestimmten Bereichen geneigt verlaufen muss, um den Förderweg an örtliche Gegebenheiten anzupassen.

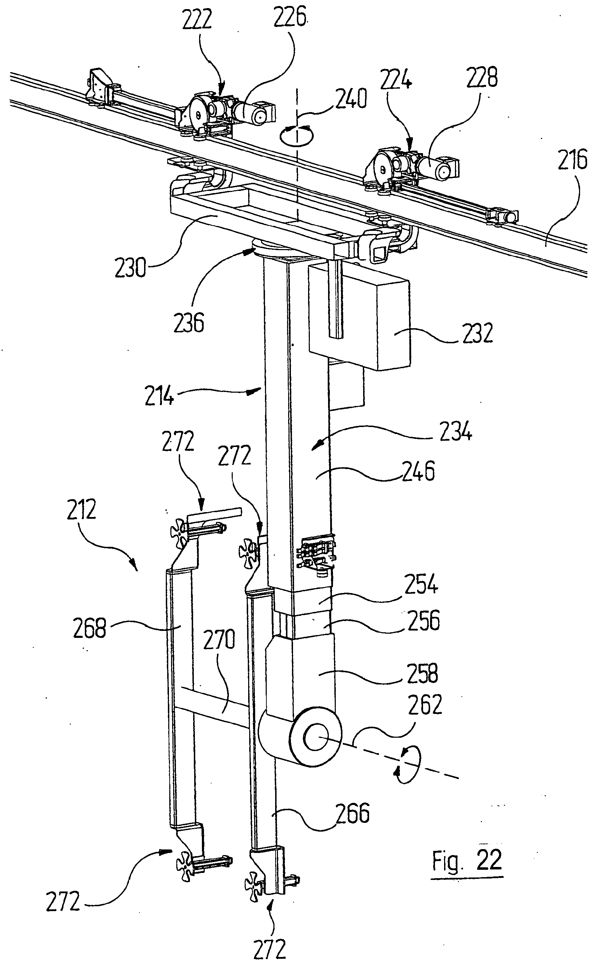

Vorläufer 222 und Nachläufer 224 jedes Antriebswagens 210 sind durch einen Verbindungsrahmen 230 miteinander verbunden, der insbesondere in den Figuren 22 bis 24 gut zu erkennen ist.

Der Verbindungsrahmen 230 trägt wiederum in bekannter Weise eine Steuereinrichtung 232, welche mit der zentralen Steuerung der Tauchlackieranlage 200 und ggfs. mit den Steuereinrichtungen 232 der anderen in der Tauchlackieranlage 200 vorhandenen Antriebswagen 210 kommunizieren kann. Auf diese Weise ist eine weitgehend unabhängige Bewegung der verschiedenen Transportwagen 208 möglich.

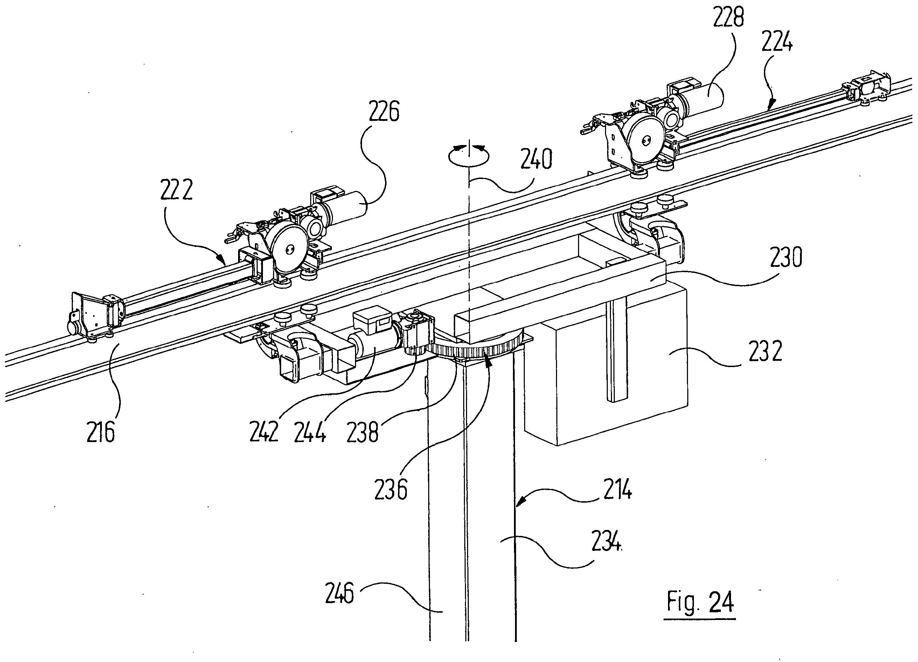

Die Teleskopeinrichtung 214, welche den Antriebswagen 210 mit dem Tragwagen 212 koppelt, umfasst einen dreigliedrigen vertikal verlaufenden Teleskoparm 234, welcher in seiner Länge veränderbar ist. Dieser ist an seinem oberen Ende stirnseitig drehfest mit einem Zahnrad 236 mit einer Außenverzahnung 238 verbunden, so dass die Längsachse des Teleskoparms 234 und die Drehachse 240 des Zahnrads 236 (vgl. Figur 24) zusammenfallen oder zumindest dicht beieinander liegen. Das Zahnrad 236 ist seinerseits etwa mittig zwischen dem Vorläufer 222 und dem Nachläufer 224 drehbar an dem Verbindungsrahmen 230 so gelagert, dass die Drehachse 240 vertikal verläuft.

Das Zahnrad 236 kann mittels eines mit der Steuereinrichtung 232 des Antriebswagens 210 kommunizierenden Stellmotors 242 angetrieben werden, welcher dazu ein in die Außenverzahnung 238 des Zahnrads 236 eingreifendes Zahnrad 244 antreibt. Somit kann der Teleskoparm 234 um die Drehachse 240 je nach Drehrichtung des Ritzels 244 sowohl im Uhrzeigersinn als auch gegen den Uhrzeigersinn verdreht werden.

Der Stellmotor 242 und das Ritzel 244 sind der Übersichtlichkeit halber lediglich in Figur 24 gezeigt, wozu der Verbindungsrahmen 230 dort teilweise weggebrochen ist.

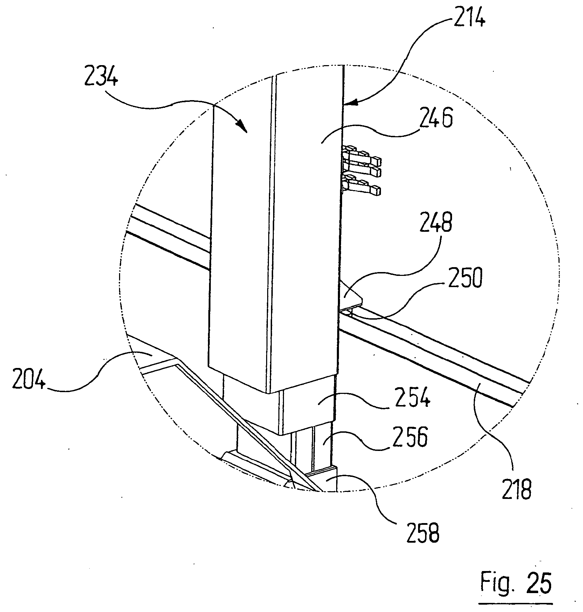

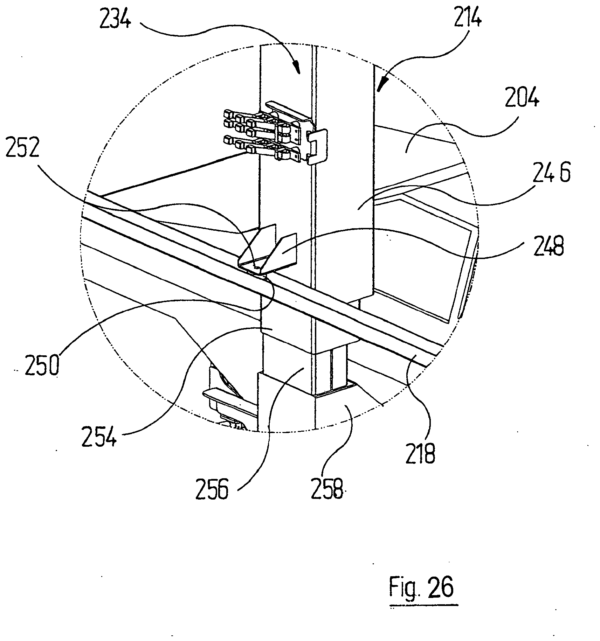

Der Teleskoparm 234 umfasst ein oberes Teleskopglied 246. Dieses trägt an seinem vom Zahnrad 236 abliegenden Ende an einem Querträger 248 eine Führungsrolle 250, welche frei um eine vertikale Drehachse 252 verdrehbar ist und in dem U-Profil der Führungsschiene 218 läuft, was insbesondere in den Figuren 25 und 26 zu erkennen ist. Auf diese Weise ist ein Verkippen des Teleskoparms 234 aus der Vertikalen in einer senkrecht auf die Bewegungsrichtung 220 stehenden Ebene verhindert.

Der Teleskoparm 234 umfasst neben dem oberen Teleskopglied 246 ein mittleres Teleskopglied 254 sowie ein unteres Teleskopglied 256. Die Teleskopglieder 246, 254 und 256 sind relativ zueinander verschiebbar, worauf weiter unten nochmals näher eingegangen wird.

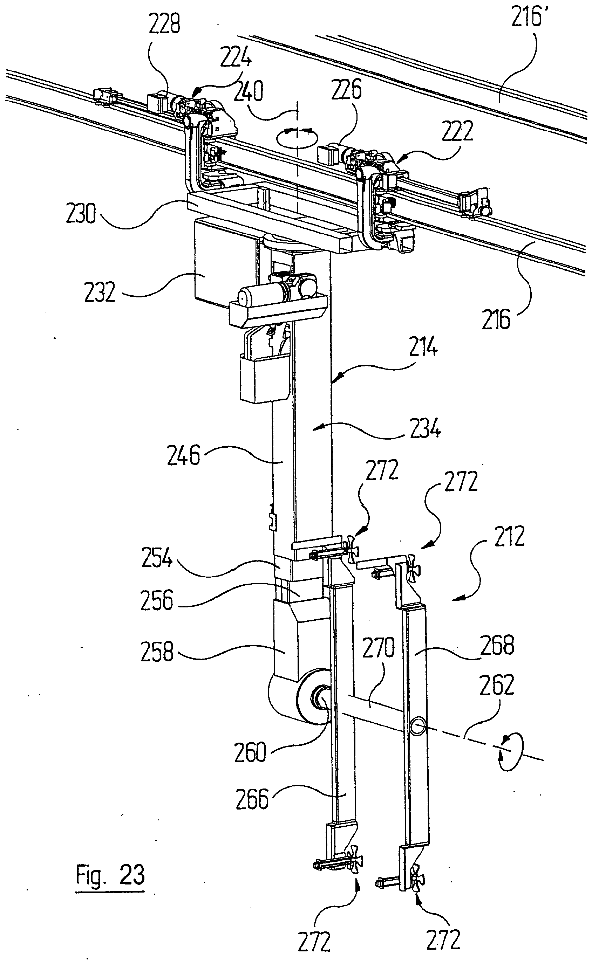

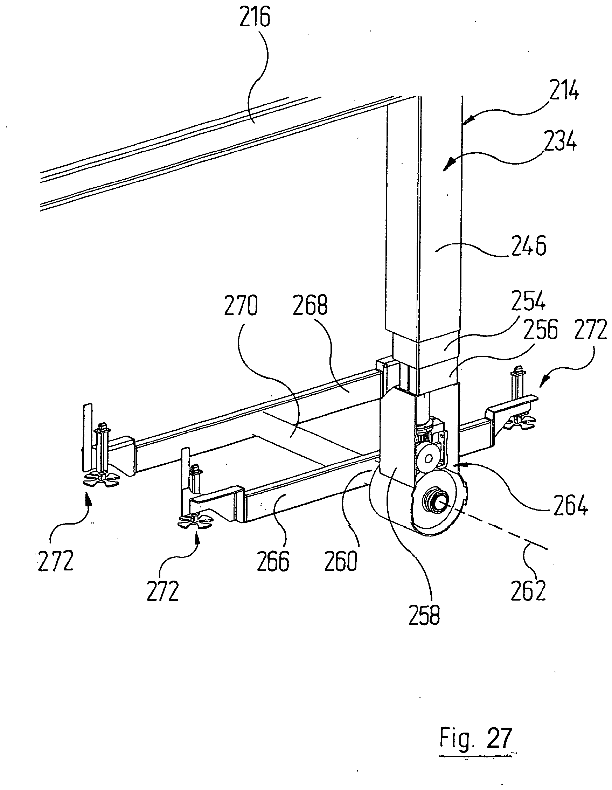

Das untere Teleskopglied 256 dient als in dem mittleren Teleskopglied 254 verfahrbarer Schlitten 256 und wird nachstehend als solcher bezeichnet. Am unteren freien Endbereich 258 des Schlittens 256 ist ein Drehzapfen 260 gelagert. Dieser definiert eine in den Figuren 22 und 23 gezeigte horizontale Drehachse 262. Der Drehzapfen 260 kann über einen von dem Schlitten 256 in seinem unteren Endbereich 258 mitgeführten Getriebemotor 264 (vgl. Figur 27, Abdeckung entfernt), welcher mit der Steuereinrichtung 232 des Transportwagen 208 kommuniziert, in beide Drehrichtungen um die Drehachse 262 verdreht werden.

Wie insbesondere in den Figuren 22, 23 und 27 gut zu erkennen ist, weist der Tragwagen 212 zwei als Hohlprofil ausgebildete und parallel zueinander verlaufende Längsholme 266 und 268 mit rechteckigem Querschnitt auf, welche mittig durch eine Quertraverse 270 mit kreisförmigen Querschnitt verbunden sind. Der Drehzapfen 260 des Schlittens 256 ist drehfest mit der Außenfläche des Längsholms 266 des Tragwagens 212 verbunden, wobei der Drehzapfen 260 und der Querholm 270 des Tragwagens 212 koaxial zueinander verlaufen. An den Stirnseiten der Längsholme 266 und 268 sind Befestigungsmittel 272 angebracht, mittels welchen eine zu lackierende Fahrzeugkarosserie 204 in an und für sich bekannter Weise an dem Tragwagen 212 lösbar befestigt werden kann.

Der Schlitten 256 trägt den Tragwagen 212 über den Drehzapfen 260 somit nur an einer Seite, so dass der Transportwagen 208 insgesamt als L-förmiger Bügel ausgebildet ist. Der Transportwagen 208 kann während seiner Bewegung entlang der Antriebsschiene 216 so ausgerichtet sein, dass der Tragwagen 212 mit den Befestigungsmitteln 272 seitlich gegenüber der Antriebschiene 216 versetzt angeordnet ist. Dadurch kann sichergestellt werden, dass keine Komponente des Fördersystems 206, z.B. unter anderem die Antriebsschiene 216 oder der Antriebswagen 210, in dem Raum senkrecht über dem Tragwagen 212 mit den Befestigungsmitteln 272 angeordnet ist. Die Gefahr einer Verunreinigung der Fahrzeugkarosserie 204 durch von Komponenten des Fördersystems 206 herabfallenden Schmutz, wie z.B. Staub, Öl oder dergleichen, ist somit verringert.

Wie oben erwähnt, können die Teleskopglieder 246, 254 und 256 des Teleskoparms 234 relativ zueinander bewegt werden. Dazu sind die Querschnitte der einzelnen Teleskopglieder 246, 254 und 256 derart komplementär zueinander ausgebildet, dass das mittlere Teleskopglied 254 in dem oberen Teleskopglied 246 und der Schlitten 256 in dem mittleren Teleskopglied 254 geführt verschoben werden kann.

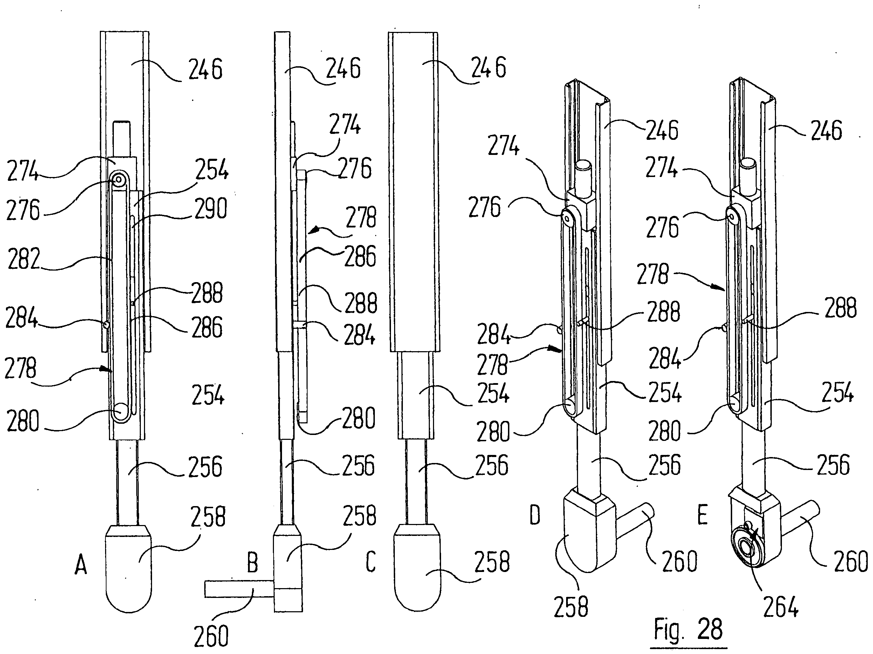

Bei einem in Figur 28 in teilweise weggebrochenen Ansichten gezeigten ersten Ausführungsbeispiel des Teleskoparms 234 trägt das mittlere Teleskopglied 254 stirnseitig an seinem oberen Ende, welches sich stets innerhalb des oberen Teleskopglieds 246 befindet, einen Stellmotor 274, welcher mit der Steuereinrichtung 232 des Transportwagens 208 kommuniziert und ein Antriebsritzel 276 in zwei Drehrichtungen antreiben kann. Eine Kette 278 läuft sowohl über das Antriebsritzel 276 des Stellmotors 274 als auch über ein Umlaufritzel 280, welches am unteren Ende des mittleren Teleskopglieds 254 gelagert ist, welches aus dem oberen Teleskopglied 246 nach unten herausragt. Die Kette 278 ist an ihrem in Figur 28A linken Trum 282 mit einem Verbindungsbolzen 284 verbunden, welcher seinerseits unbeweglich an dem oberen Teleskopglieds 246 angebracht ist. Das gegenüberliegende zweite Trum 286 der Kette 278 ist mit einem Verbindungsbolzen 288 gekoppelt, welcher seinerseits unbeweglich mit dem Schlitten 256 des Teleskoparms 234 verbunden ist. Der Verbindungsbolzen 288 des Schlittens 256 läuft in einem Schlitz 290, der in einer Seitenwand des mittleren Teleskopglieds 254 vorgesehen ist, wogegen der Verbindungsbolzen 278 des oberen Teleskopglieds 246 seitlich an dem mittleren Teleskopglied 254 vorbeigeführt ist.

Wird nun der Stellmotor 274 derart von der Steuereinrichtung 232 des Transportwagens 208 angesteuert, dass sich das Antriebsritzel 276 in Figur 28A im Uhrzeigersinn verdreht, so wird der mit dem Schlitten 256 gekoppelte Verbindungsbolzen 288 von der Kette 278 nach unten mitgenommen, so dass sich das Schlittens 256 aus dem mittleren Teleskopglied 254 herausschiebt. Gleichzeitig wird das mittlere Teleskopglied 254 aufgrund des unbeweglichen und am oberen Teleskopglied 246 befestigten Verbindungsbolzen 284 aus dem oberen Teleskopglied 246 heraus geschoben. Auf diese Weise wird der Teleskoparm 236 insgesamt ausgefahren. Der Teleskoparm 234 kann wieder eingefahren werden, indem das Antriebsritzel 276 durch den Stellmotor 274 derart verdreht wird, dass es sich in Figur 28A entgegen dem Uhrzeigersinn bewegt.

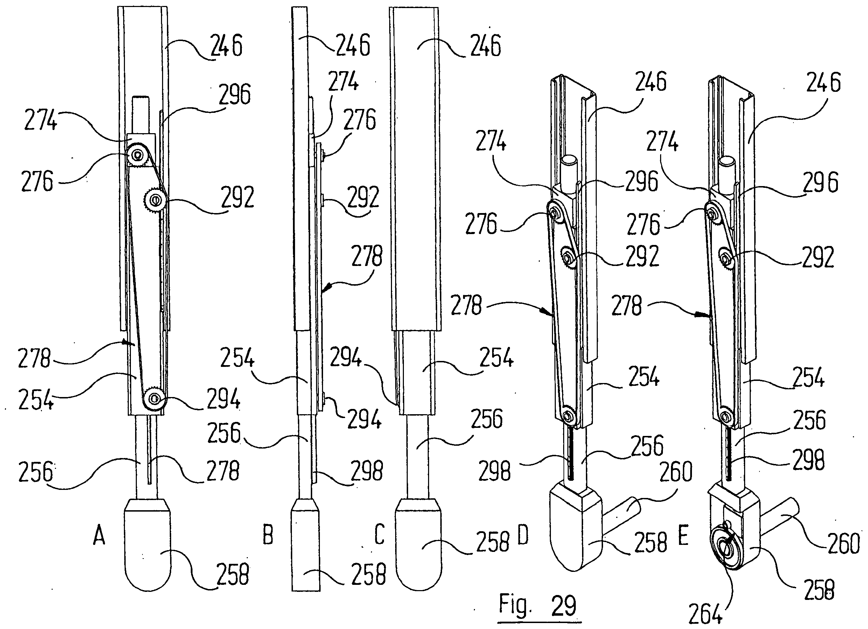

Eine alternative Ausbildung des Teleskoparms 234 ist in Figur 29 in teilweise weggebrochenen Ansichten gezeigt. Dort läuft die Kette 278 über das Antriebsritzel 276 des Stellmotors 274 sowie über ein erstes Koppelritzel 292 und ein zweites Koppelritzel 294 ab. Die Koppelritzel 292 und 294 tragen koaxial jeweils ein Stirnrad, welche in den Ansichten der Figur 29 nicht zu erkennen sind. Die Außenverzahnung des Stirnrads am Koppelritzel 292 greift in eine unbeweglich mit dem oberen Teleskopglied 246 des Teleskoparms 234 verbundene Zahnstange 296 ein und ist im oberen Bereich des mittleren Teleskopglieds 254 angeordnet. Das Koppelritzel 294 ist dagegen im unteren Bereich des mittleren Teleskopglieds 254 angeordnet; die Verzahnung des daran angebrachten Stirnrades greift in eine unbeweglich mit dem Schlitten 256 des Teleskoparms 234 verbundene Zahnstange 298 ein. Dazu erstreckt sich das nicht zu erkennende Stirnrad am Koppelritzel 294 durch eine Seitenwand des mittleren Teleskopglieds 254 hindurch.

Wird nun der Stellmotor 274 derart von der Steuereinrichtung 232 des Transportwagens 208 angesteuert, dass sich das Antriebsritzel 276 in Figur 29A entgegen dem Uhrzeigersinn verdreht, so werden auch die Koppelritzel 292 und 294 entgegen dem Uhrzeigersinn verdreht. Durch den Eingriff der daran befestigten Stirnräder in die Zahnstangen 296 bzw. 298 wird dabei das mittlere Teleskopglied 254 des Teleskoparms 234 aus dem oberen Teleskopglied 246 und gleichzeitig der Schlitten 256 aus dem mittleren Teleskopglied 254 heraus geschoben.

Wird das Kettenritzel 276 im Uhrzeigersinn verdreht, so wird der Schlitten 256 in das mittlere Teleskopglied 254 und gleichzeitig dieses in das obere Teleskopglied 246 eingefahren.

Bei hier nicht gezeigten Abwandlungen kann die Hub-/Senkbewegung der Teleskopglieder 246 und 254 und des Schlittens 256 auch durch eine Schubkette oder ähnliche Vorrichtungen bewirkt werden.

Die Funktionsweise der oben beschriebenen kataphoretischen Tauchlackieranlage 200 ist folgende:

Die zu lackierenden Fahrzeugkarosserien 204 werden in Figur 21 in im Wesentlichen horizontaler Ausrichtung (vgl. Pfeil 220) von einer Vorbehandlungsstation zugeführt, in welcher die Fahrzeugkarosserien 204 in bekannter Weise durch Reinigen, Entfetten usw. auf den Lackiervorgang vorbereitet werden.

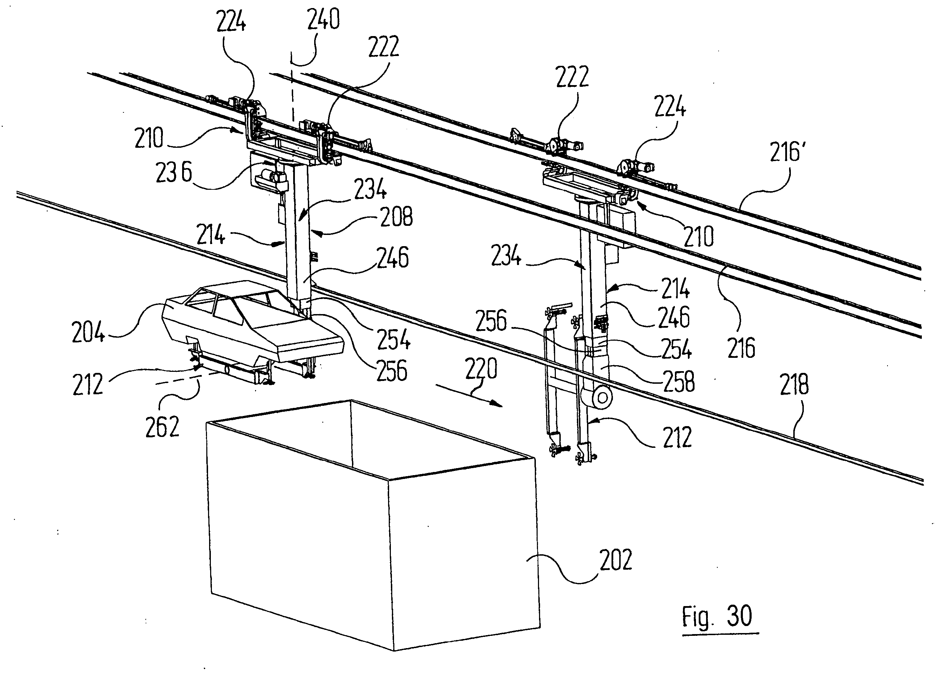

Der Schlitten 256 ist dabei in seine oberste Position verfahren, in welcher die Teleskopglieder 256, 254 und 256 des Teleskoparms 234 ineinander gefahren sind, so dass letzterer seine geringstmögliche Länge aufweist. Die entsprechende Position ist perspektivisch in Figur 30 zu erkennen. Der Antriebswagen 210 des entsprechenden Transportwagens 208 wird mit Hilfe der Elektromotoren 226 und 228 entlang der Antriebsschiene 216 auf das Tauchbecken 202 zugeführt, wobei der zugehörige Tragwagen 212 über die Teleskopeinrichtung 214 mitgeführt wird. Dabei läuft die Führungsrolle 250 am oberen Teleskopglied 246 des Teleskoparms 234 in dem U-Profil der Führungsschiene 218, was jedoch nicht der Gewichtsaufnahme dient. Das Gewicht des Transportwagens 208 und der daran befestigten Fahrzeugkarosserie 204 wird über den Antriebswagen 210 vollständig von der Antriebsschiene 216 getragen.

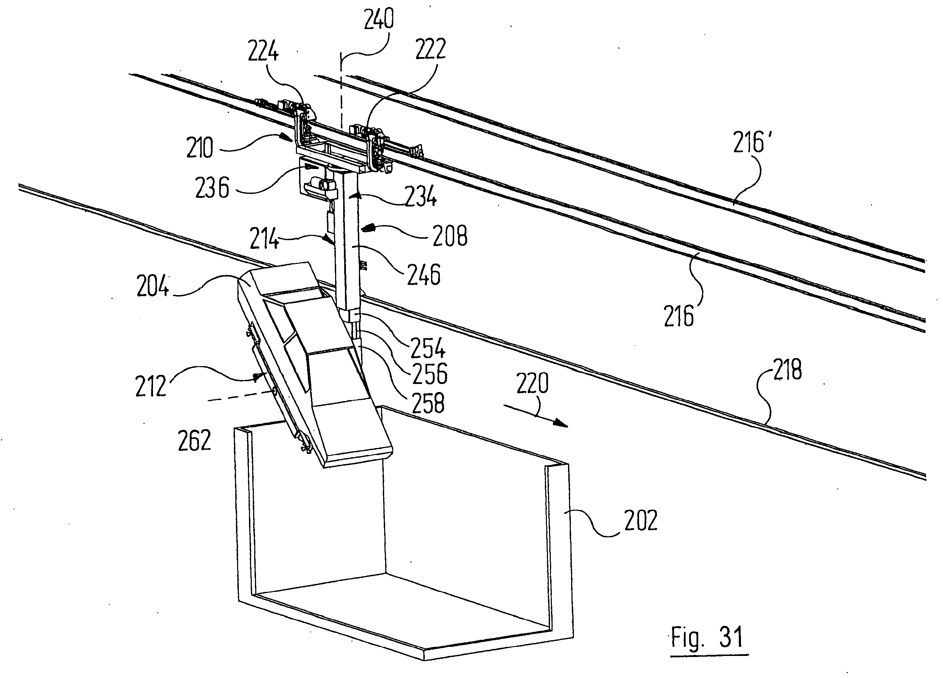

Wenn sich der Transportwagen 208 der auf der Eintrittsseite befindlichen Stirnwand des Tauchbeckens 202 nähert, wird der Schlitten 256, welcher die Fahrzeugkarosserie 204 über den Transportwagen 208 trägt, progressiv abgesenkt, indem mit Hilfe des Stellmotors 274 der Teleskoparm 234 in oben beschriebener Weise ausgefahren wird. Sobald die Front der Fahrzeugkarosserie 204 über die Stirnwand des Tauchbeckens 202 hinaus ins Innere des Tauchbeckens 202 ragt, wird gleichzeitig mit Hilfe des Getriebemotors 264 der Drehzapfen 260 und damit der Tragwagen 212 mit den Befestigungsmitteln 272 und daran befestigter Fahrzeugkarosserie 204 um die Drehachse 262 verdreht. In diesem Bereich ist also die Gesamtbewegung der Fahrzeugkarosserie 204 als Überlagerung dreier Bewegungen zu verstehen, nämlich einer horizontalen Linearbewegung (Pfeil 220) entlang der Antriebsschiene 216, einer vertikalen Linearbewegung entlang der Drehachse 240 und damit auch entlang der Längsachse des Teleskoparms 234 und einer Drehbewegung um die Drehachse 262 des Drehzapfens 260, die in der Sicht der Figur 21 im Uhrzeigersinn erfolgt. Dabei "wickelt" sich die Fahrzeugkarosserie 204 über die eingangsseitige Stirnwand des Tauchbeckens 202. Die entsprechende Position ist perspektivisch in Figur 31 dargestellt.

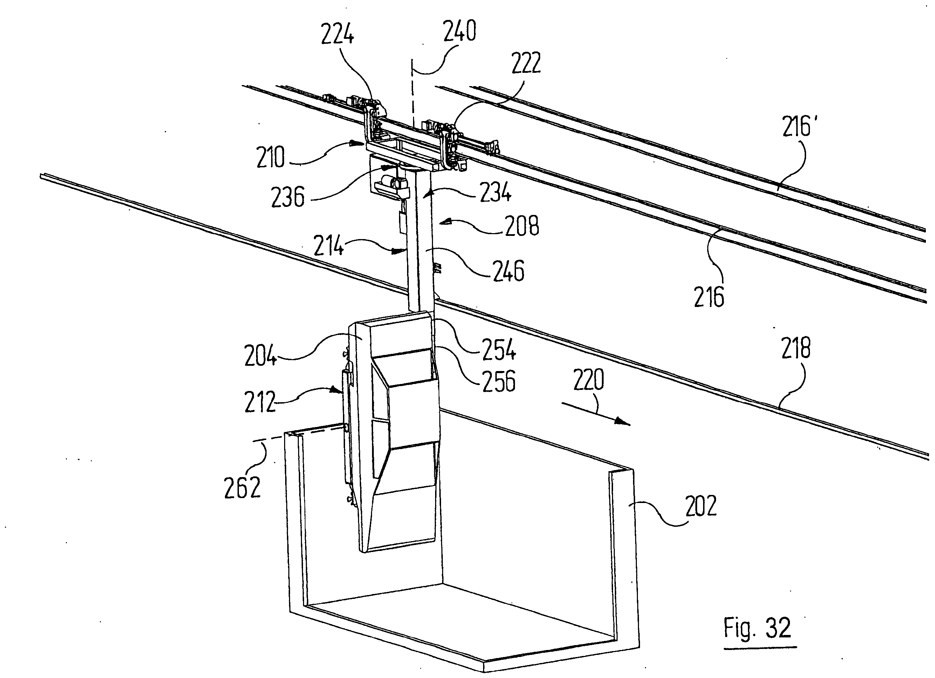

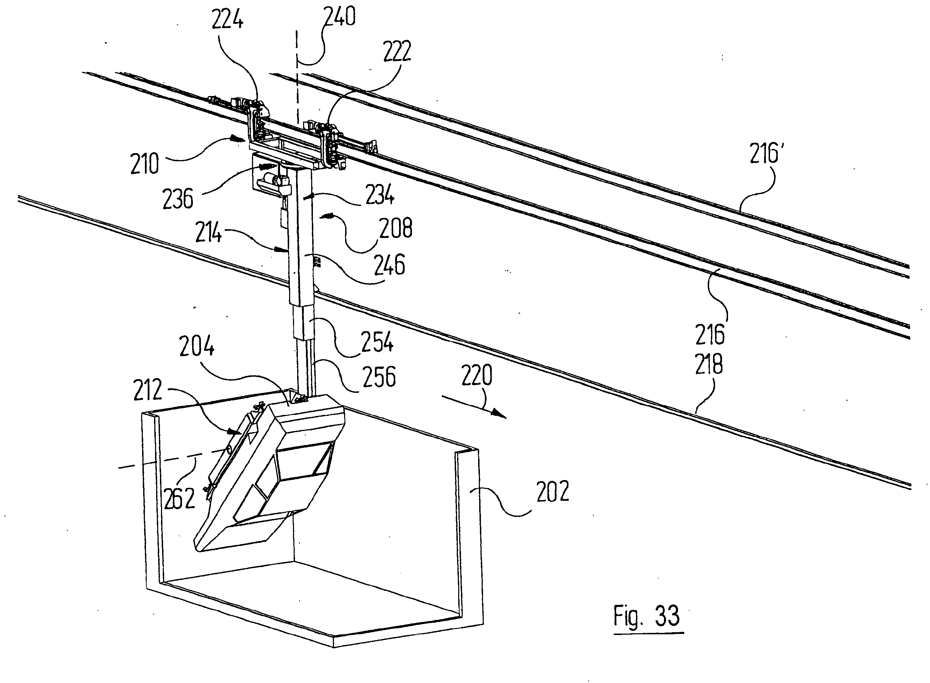

Unter fortgesetztem Absenken des Schlittens 256 und fortgesetzter Drehung der Fahrzeugkarosserie 204 um die Drehachse 262 des Drehzapfens 260 wird schließlich eine Position erreicht, in welcher die Fahrzeugkarosserie 204 im Wesentlichen senkrecht steht, wie dies in Figur 32 dargestellt ist. Dabei befindet sich die Fahrzeugkarosserie 204 noch verhältnismäßig nahe an der eingangsseitigen Stirnwand des Tauchbeckens 202. In dem Ausmaß, in dem sich der Transportwagen 208 weiter bewegt und damit der Abstand zwischen der Mitte der Fahrzeugkarosserie 204 und der eingangsseitigen Stirnwand des Tauchbeckens 202 wächst, wird der Drehzapfen 260 und damit die Fahrzeugkarosserie 204 weiter im Uhrzeigersinn verdreht, so dass sich die Fahrzeugkarosserie 204 auf den Rücken zu legen beginnt, was in Figur 33 dargestellt ist. Die Bewegungsgeschwindigkeit in horizontaler Richtung und die Drehgeschwindigkeit können dabei so aufeinander abgestimmt werden, dass die Front der Fahrzeugkarosserie 204 bei dieser Eintauchbewegung etwa denselben Abstand von der eingansseitigen Stirnseite des Tauchbeckens 202 behält.

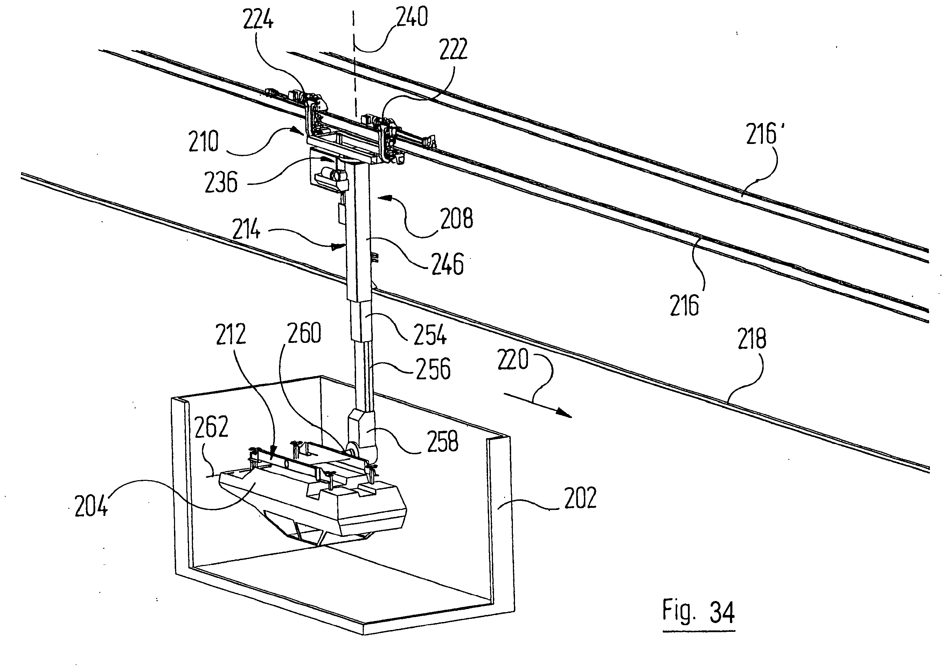

Spätestens in dem Moment, in dem die Fahrzeugkarosserie 204 vollständig "auf dem Rücken" und damit wieder horizontal liegt und der in Figur 34 dargestellt ist, ist die Fahrzeugkarosserie 204 vollständig in den flüssigen Lack eingetaucht. Die Fahrzeugkarosserie 204 wird zunächst in dieser Position mit Hilfe des Transportwagens 208 weiter durch das Tauchbecken 202 gefördert, bis sie näher an die ausgangsseitige Stirnwand des Tauchbeckens 202 herangerückt ist.

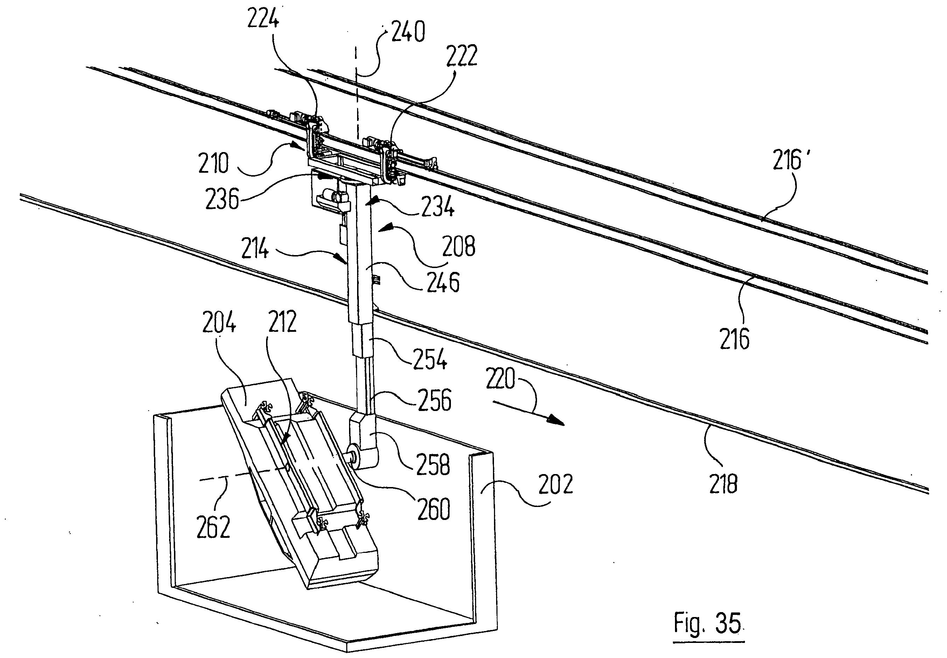

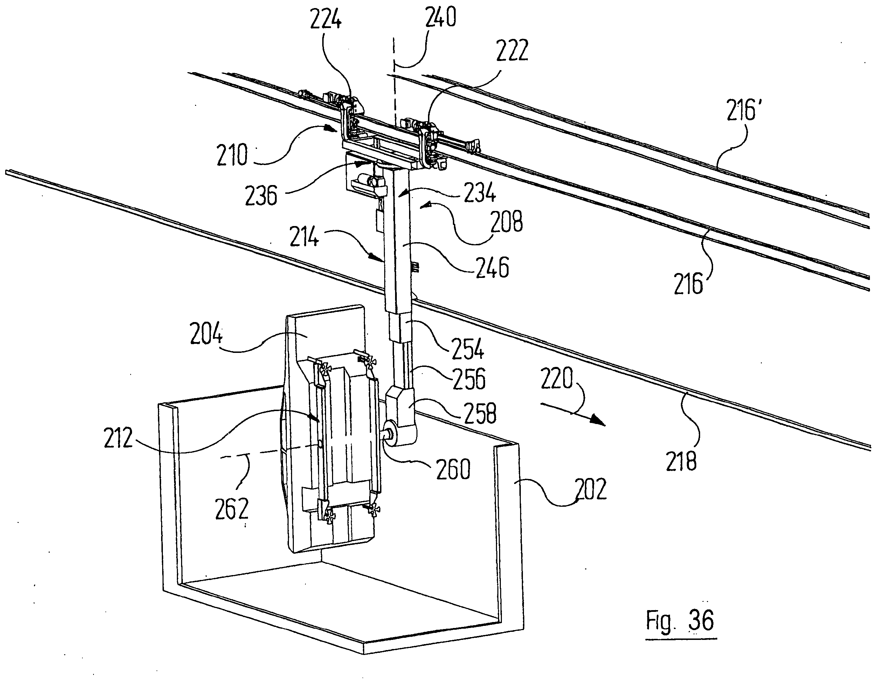

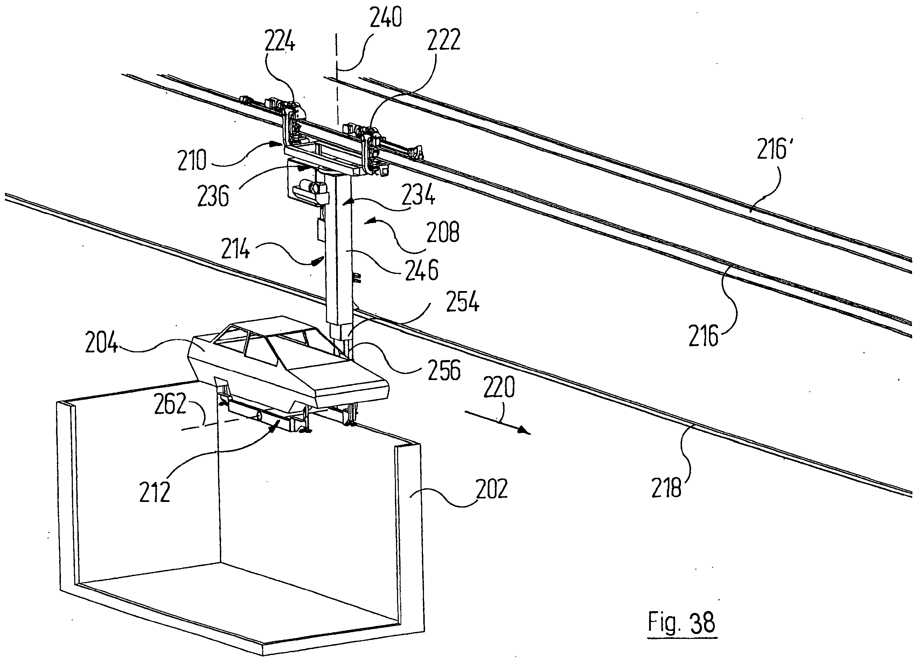

Sodann beginnt der Austauchvorgang der Fahrzeugkarosserie 204. Dieser stellt sich wiederum als Überlagerung von drei Bewegungen dar, nämlich der horizontalen Linearbewegung in Förderrichtung 220, der Vertikalbewegung entlang der Drehachse 240 und damit auch entlang der Längsachse des Teleskoparms 234 und der Drehbewegung um die Drehachse 262 des Drehzapfens 260. Zunächst wird die Fahrzeugkarosserie 204 durch Weiterverdrehen des Drehzapfens 260 im Uhrzeigersinn vertikal gestellt, was in den Figuren 35 und 36 dargestellt ist. Sodann "wickelt" sich die Fahrzeugkarosserie 204 unter Einfahren des Teleskoparms 234 und damit unter einer Aufwärtsbewegung des Schlittens 256 und Fortsetzung der Drehbewegung über die ausgangsseitige Stirnwand des Tauchbeckens 202 weg (vgl. Figur 27), bis dann erneut in Förderrichtung 220 hinter dem Tauchbecken 202 eine horizontale Position der frisch lackierten Fahrzeugkarosserie 204 erreicht ist, welche in Figur 38 gezeigt ist.

Die beschriebene Tauchlackieranlage 200 kann auch zum Tauchlackieren kleinerer Gegenstände (Kleingüter) verwendet werden. Dazu können beispielsweise nicht eigens gezeigte Haltekörbe an den Tragwagen 212 befestigt werden, welche nicht dargestellte kleinteilige, zu lackierende Gegenstände beispielsweise in loser Schüttung enthalten. Es versteht sich, dass solche Haltekörbe nicht in einer Position durch das Tauchbecken 202 geführt werden, in welcher ihre Beschickungsöffnung nach unten weist und zu beschichtende Gegenstände herausfallen könnten.

Wie oben erläutert, kann der Teleskoparm 234 über den Stellmotor 242 um die vertikale Drehachse 240 verdreht werden. Bei der in den Figuren 21 und 30 bis 38 gezeigten Kinematik nimmt der Teleskoparm 234 im Hinblick auf seine vertikale Drehachse 240 eine Stellung ein, bei welcher der Drehzapfen 260 am Schlitten 256 derart ausgerichtet ist, dass seine horizontale Drehachse 262 senkrecht auf die Bewegungsrichtung 220 steht. Der Teleskoparm 234 wird durch eine entsprechende Arretierung des Stellmotors 242 in dieser Stellung gehalten.

Die Verdrehbarkeit des Teleskoparms 234 um die vertikale Drehachse 240 kommt bei der in den Figuren 21 und 30 bis 38 gezeigten Kinematik erst zu tragen, wenn die Fahrzeugkarosserien 204 das Tauchbecken 202 verlassen haben und von den Transportwagen 208 zur weiteren Bearbeitung abgenommen sind.

Die Transportwagen 208 müssen dann wieder zum Eingang der Tauchlackieranlage 200 zurückgeführt werden, damit sie dort erneut mit noch zu lackierenden Fahrzeugkarosserien 204 beladen werden können. Hierzu wird der Tragwagen 212 gegenüber dem Verbindungsrahmen 230 des Antriebswagens 210 um die vertikale Drehachse 240 verdreht, bis der Drehzapfen 260 am Schlitten 256 parallel zur Bewegungsrichtung 220 ausgerichtet ist, indem der Stellmotor 242 betätigt und darüber das Zahnrad 236 am oberen Teleskopglied 246 des Teleskoparms 234 verdreht wird. Zudem wird der Tragwagen 212 durch eine entsprechende Drehung des Drehzapfens 260 über den Getriebemotor 264 in eine Stellung gebracht, in welcher seine Längsholme 266 und 268 vertikal stehen. Diese Stellung ist in den Figuren 22 und 23 gezeigt. In Figur 30 ist ein Transportwagen 208 zu erkennen, der in dieser "Rückführstellung" auf einer Antriebsschiene 216', welche parallel zur Antriebsschiene 216 läuft und über ein nicht zu erkennendes Schienenkurvenstück mit dieser verbunden ist, zum Eingang der Tauchlackieranlage 200 zurückgeführt wird.

Die Übergabe des Transportwagens 208 von der Antriebsschiene 216 auf die Antriebsschiene 216' kann auch mittels einer Querverschiebung erfolgen, ohne dass dazu ein die Antriebsschienen 216, 216' verbindendes Schienenkurvenstück nötig wäre.

Durch die Drehung des Tragwagens 212 und dessen Vertikalstellung gegenüber dem Antriebswagen 210 wird der Platzbedarf für den Transportwagen 208 auf dem Rückweg vom Ausgang der Tauchlackieranlage 200 zu deren Eingang verringert.

Der oben anhand der Figuren 30 bis 38 geschilderte Bewegungsablauf der Fahrzeugkarosserie 204 beim Durchgang durch das Tauchbecken 202 ist nur beispielhaft. Die konstruktive Ausgestaltung des Transportwagens 208 lässt eine Vielzahl anderer Kinematiken zu, die jeweils an die Art der Fahrzeugkarosserie 3 angepasst werden können. Beispielsweise kann die Fahrzeugkarosserie 204 auf "Dach oben" durch das Tauchbecken 202 geführt werden.

Alternativ ist es möglich, dass die Drehachse 262 des Tragwagens 212 knapp über dem Flüssigkeitsspiegel der im Tauchbad 202 befindlichen Badflüssigkeit geführt wird. In diesem Fall wird die Fahrzeugkarosserie "Dach unten" durch das Tauchbecken 202 geführt. Dabei kann erreicht werden, dass weder der Tragwagen 212 noch der Schlitten 256 mit Badflüssigkeit in Kontakt kommen, wodurch die Gefahr verringert ist, Badflüssigkeit von einem Tauchbad ins nächste Tauchbad zu verschleppen und Schmiermittel in die Tauchbäder einzutragen.

Es ist beispielsweise auch möglich, den durch die vertikale Drehachse 240 vorgegebenen weiteren Freiheitsgrad zu nutzen, wenn die Fahrzeugkarosserie 204 durch das Tauchbecken 202 geführt wird. So kann eine Fahrzeugkarosserie 204 bei entsprechenden Abmessungen des Tauchbeckens 202 auch quer durch dieses geführt werden und nicht in Längsrichtung, wie es in den Figuren 30 bis 38 veranschaulicht ist. Auch kann der Teleskoparm 234 so weit um die vertikale Drehachse 240 gedreht werden, dass der Drehzapfen 260 bzw. dessen Drehachse 262 mit der Bewegungsrichtung 220 einen Winkel zwischen 0 und 90° einschließt. Auch kann der Teleskoparm 234 um die vertikale Drehachse 240 hin- und hergedreht werden, während die Fahrzeugkarosserie 204 durch das Tauchbecken 202 geführt wird, wodurch eine "Schlingerbewegung" der Fahrzeugkarosserie 204 im Tauchbecken 202 erzielt werden kann.

Für die Fahrzeugkarosserie 204 kann somit ein Bewegungsablauf erzielt werden, der als Überlagerung von vier Bewegungen verstanden werden kann, nämlich einer horizontalen Linearbewegung (entsprechend der Bewegungsrichtung 220), einer vertikalen Linearbewegung entlang der Drehachse 240 und damit entlang der Längsachse des Teleskoparms 234, einer Drehbewegung um die horizontale Drehachse 262 des Drehzapfens 260 und einer Drehbewegung um die vertikale Drehachse 240 des Teleskoparms 234.

Das als Hängebahnsystem ausgebildete Fördersystem 206 erfordert keine weiteren Aufbauten rechts und/oder links des Tauchbeckens 202, wie sie bei anders konzipierten Anlagen notwendig sind. Dadurch kann die Tauchlackieranlage 200 insgesamt verhältnismäßig schmal gehalten werden.

Durch die seitliche Lagerung des Tragwagens 212 gibt es darüber hinaus keine Abschattungen der Fahrzeugkarosserie 204 durch weitere Bauteile des Transportwagens 208, die im Tauchbad entsprechend aufwändig durch eine geeignete Kinematik und/oder eine längere Verweilzeit im Tauchbad kompensiert werden müssten.

Beim Führen der Fahrzeugkarosserie 204 durch das Tauchbad wird der untere Endbereich 258 des Schlittens 256, welcher den horizontalen Drehzapfen 262 trägt, in die Badflüssigkeit abgesenkt. Dadurch kann die horizontale Drehachse 260 nahe dem Schwerpunkt der von dem Tragwagen 212 aufgenommenen Fahrzeugkarosserie 204 angeordnet sein. Dies führt zu einer günstigeren Kraftverteilung beim Bewegungsablauf für die Fahrzeugkarosserie als es bei bekannten Systemen der Fall ist, bei denen die Drehachse verhältnismäßig weit vom Schwerpunkt der Fahrzeugkarosserie abliegt.

## Patentansprüche

1. Verwendung einer Tauchbehandlungsanlage für Fahrzeugkarosserien mit
a) mindestens einem Tauchbecken (2; 102; 202), welches mit einer Behandlungsflüssigkeit füllbar ist, in welche zu behandelnde Fahrzeugkarosserien (3; 103; 204) vollständig eingetaucht werden können;
b) einem Fördersystem (4; 104; 206), welches die Fahrzeugkarosserien (3; 103; 204) an das Tauchbecken (2; 102; 202) heran, vollständig in den Innenraum des Tauchbeckens (2; 102; 202) hinein, aus dem Tauchbecken (2; 102; 202) heraus und von diesem wegbewegen kann und welches mindestens einen Transportwagen (5; 105; 208) umfasst, der eine um eine Drehachse (24; 124; 262) verdrehbare Befestigungseinrichtung (29; 129; 212, 272) aufweist, an welcher mindestens eine Fahrzeugkarosserie (3; 103; 204) befestigbar ist;
wobei
c) der Transportwagen (5; 105; 208) einen vertikal verfahrbaren Schlitten (21; 121; 258) umfasst, an dem ein die Drehachse (24; 124; 262) definierendes Bauteil (24; 124; 260) gelagert ist, derart, dass insgesamt für die mindestens eine Fahrzeugkarosserie (3; 103; 204) ein Bewegungsablauf erzielbar ist, der eine Überlagerung aus einer horizontalen Linearbewegung, einer vertikalen Linearbewegung und einer Drehbewegung um die Drehachse (24; 124; 262) ist; zum Zwecke einer Tauchbehandlung der mindestens einen Fahrzeugkarosserien, **dadurch gekennzeichnet, dass** die Verwendung darin besteht, dass
d) dieser Bewegungsablauf durchgeführt wird, während die mindestens eine Fahrzeugkarosserie (3; 103; 204) durch das mindestens eine Tauchbecken (2; 102; 202) hindurch geführt wird.

2. Verwendung einer Tauchbehandlungsanlage nach Anspruch 1, **dadurch gekennzeichnet, dass** der Transportwagen (5; 105; 208) umfasst:
a) einen an einer Antriebsschiene (41; 141; 216) motorisch verfahrbaren Antriebswagen (6; 106; 210);
b) eine an den Antriebswagen (6; 106; 210) angekoppelte Tragstruktur (7; 107; 234), an welcher der Schlitten (21; 121; 252) befestigt ist.

3. Verwendung einer Tauchbehandlungsanlage nach Anspruch 2, **dadurch gekennzeichnet, dass** die Antriebsschiene (41; 141; 216) und der Antriebswagen (6; 106; 210) nach Art einer herkömmlichen Elektrohängebahn ausgebildet sind.

4. Verwendung einer Tauchbehandlungsanlage nach Anspruch 2 oder 3, da durch gekennzeichnet, dass die Tragstruktur ein Tragwagen (7; 107) ist, welcher einen Führungsrahmen (18; 118) aufweist, der an mindestens einer sich in Bewegungsrichtung erstreckenden Führungsschiene (18; 108) geführt ist.

5. Verwendung einer Tauchbehandlungsanlage nach einem der Ansprüche 2 bis 4, **dadurch gekennzeichnet, dass** der Antriebswagen (6) mindestens eine motorisch drehbare Wickelrolle (15) aufweist, auf welcher mindestens ein flexibles Zugmittel (17) auf- bzw. von dieser abwickelbar ist, dessen unteres Ende mit dem vertikal verfahrbaren Schlitten (21) verbunden ist.

6. Verwendung einer Tauchbehandlungsanlage nach einem der Ansprüche 2 bis 4, **dadurch gekennzeichnet, dass** die Tragstruktur (107) an einem nicht vertikal bewegbaren Teil (150) mindestens eine motorisch drehbare Wickelrolle (115) aufweist, auf welche mindestens ein flexibles Zugmittel (117) auf- bzw. von dieser abwickelbar ist, dessen unteres Ende mit dem vertikal verfahrbaren Schlitten (121) verbunden ist.

7. Verwendung einer Tauchbehandlungsanlage nach Anspruch 5 oder 6, **dadurch gekennzeichnet, dass** das flexible Zugmittel ein Tragband ist.

8. Verwendung einer Tauchbehandlungsanlage nach Anspruch 5 oder 6, **dadurch gekennzeichnet, dass** das flexible Zugmittel eine Kette ist.

9. Verwendung einer Tauchbehandlungsanlage nach Anspruch 8, **dadurch gekennzeichnet, dass** die flexible Kette sc ausgestaltet ist, dass sie sich unter Druck versteift, so dass sie Druckkräfte übertragen kann.

10. Verwendung einer Tauchbehanalungsanlage nach Anspruch 2 oder 3, **dadurch gekennzeichnet, dass** die Tragstruktur (254, 256) von einer in vertikaler Richtung ein- oder ausfahrbaren Teleskopeinrichtung (214) umfasst ist, welche den Schlitten (256) führt.

11. Verwendung einer Tauchbehandlungsanlage nach einem der vorhergehenden Ansprüche, **dadurch gekennzeichnet, dass** der Motor (26; 126; 264), mit welchem das die Drehachse definierende Bauteil (24; 124; 260) verdrehbar ist, an dem Schlitten (21; 121; 258) angeordnet und gemeinsam mit diesem vertikal verfahrbar ist.

12. Verwendung einer Tauchbehandlungsanlage nach einem der vorhergehenden Ansprüche, **dadurch gekennzeichnet, dass** die Tragstruktur (107; 234) gegenüber dem Antriebswagen (106; 210) um eine im Wesentlichen vertikale Achse verdrehbar ist.

13. Verwendung einer Tauchbehandlungsanlage nach Anspruch 12, **dadurch gekennzeichnet, dass** entlang des Rückführweges der Transportwagen (105) vom Ausgang zum Eingang der Tauchbehandlungsanlage (101) mindestens eine Führungsschiene (156) verläuft, die mit einem am Tragwagen (107) vorgesehenen Führungsglied (155) zusammenarbeitet.

14. Verwendung einer Tauchbehandlungsanlage nach einem der vorhergehenden Ansprüche, **dadurch gekennzeichnet, dass** der Transportwagen (208) derart eingerichtet ist, dass die Befestigungseinrichtung (212, 272) wenigstens entlang eines Abschnitts der Antriebsschiene (216) seitlich gegenüber der Antriebsschiene (216) versetzt förderbar ist.

15. Verwendung einer Tauchbehandlungsanlage nach Anspruch 14, **dadurch gekennzeichnet, dass** die Befestigungseinrichtung (212, 272) eine Tragstruktur (212) mit Befestigungsmitteln (272) umfasst, welche lediglich über eine Seitenfläche von einem weiteren Bauteil (256) des Transportwagens (208) getragen ist.

16. Verwendung einer Tauchbehandlungsanlage nach Anspruch 14 oder 15, **dadurch gekennzeichnet, dass** Sicherungsmittel (218, 248, 250) vorgesehen sind, welche den Transportwagen (208) gegen ein Verkippen um eine zur Antriebsschiene (216) parallele Kippachse sichern.

17. Verwendung einer Tauchbehandlungsanlage nach Anspruch 16, **dadurch gekennzeichnet, dass** die Sicherungsmittel (218, 248, 250) eine parallel zur und unterhalb der Antriebsschiene (216) angeordnete Stützstruktur (218) umfassen, an welcher sich der Tragwagen (208) abstützt.

18. Verwendung einer Tauchbehandlungsanlage nach Anspruch 10, **dadurch gekennzeichnet, dass** die Sicherungsmittel (218, 248, 250) eine am Transportwagen (208) angebrachte, um eine vertikale Drehachse verdrehbare Führungsrolle (250) umfassen, welche in einer dazu komplementären Führungsschiene (218) geführt ist, wobei die Führungsschiene (218) unterhalb der Antriebsschiene (216) parallel zu dieser verläuft.

## Claims

1. Use of an immersion treatment system for vehicle bodies comprising
a) at least one immersion basin (2; 102; 202) which can be filled with a treatment liquid, in which vehicle bodies to be treated (3; 103; 204) can be completely immersed;
b) a conveyor system (4; 104; 206) which can move the vehicle bodies to be treated (3; 103; 204) to the immersion basin (2; 102; 202), put them completely into the interior of the immersion basin (2; 102; 202), take them out of the immersion basin (2; 102; 202) and move them away therefrom and which comprises at least one transport carriage (5; 105; 208) which comprises a securing device (29; 129; 212, 272) that can be rotated about an axis of rotation (24; 124; 262) and to which at least one vehicle body (3; 103; 204) may be secured;
wherein
c) the transport carriage (5; 105; 208) comprises a vertically traversable slide (21; 121; 256) on which a component (24; 124; 260) that defines the axis of rotation (24; 124; 262) is supported, such that altogether it is possible to achieve a movement sequence for the at least one vehicle body (3; 103; 204) which is a superposition of a horizontal linear movement, a vertical linear movement and a rotary movement about the axis of rotation (24; 124; 262);
for the purpose of an immersion treatment of the at least one vehicle body, **characterised in that**
the use consists of
d) executing this movement sequence while the at least one vehicle body (3; 103; 204) is being passed through the at least one immersion basin (2; 102; 202).

2. Use of an immersion treatment system according to Claim 1, **characterised in that** the transport carriage (5; 105; 208) includes:
a) a drive carriage (6; 106; 210) which may be traversed by motor on a drive rail (41; 141; 216);
b) a supporting structure (7; 107; 234) which is coupled to the drive carriage (6; 106; 210) and onto which the slide (21; 121; 256) is mounted.

3. Use of an immersion treatment system according to Claim 2, **characterised in that** the drive rail (41; 141; 216) and the drive carriage (6; 106; 210) are constructed in the manner of a conventional electric overhead conveyor.

4. Use of an immersion treatment system according to Claim 2 or 3, **characterised in that** the supporting structure is a supporting carriage (7; 107) which includes a guide frame (18; 118) that is guided on at least one guide rail (18; 108) extending in the direction of movement.

5. Use of an immersion treatment system according to one of Claims 2 to 4, **characterised in that** the drive carriage (6) includes at least one winding reel (15) which may be rotated by motor and onto or off which at least one flexible drawing means (17) may be wound or unwound, the lower end of this flexible drawing means being connected to the vertically traversable slide (21).

6. Use of an immersion treatment system according to one of Claims 2 to 4, **characterised in that** the supporting structure (107) comprises at least one winding reel (115) on a part (150) which is not vertically traversable, the winding reel (115) being rotatable by motor and onto or off which at least one flexible drawing means (117) may be wound or unwound, the lower end thereof being connected to the vertically traversable slide (121).

7. Use of an immersion treatment system according to Claim 5 or 6, **characterised in that** the flexible drawing means is a carrying belt.

8. Use of an immersion treatment system according to Claim 5 or 6, **characterised in that** the flexible drawing means is a chain.

9. Use of an immersion treatment system according to Claim 8, **characterised in that** the flexible chain is constructed such that it stiffens under pressure, so that it can transfer pressure forces.

10. Use of an immersion treatment system according to Claim 2 or 3, **characterised in that** the supporting structure (254, 256) is comprised of a telescopic device (214) which may be retracted or extended in the vertical direction and which guides the slide (256).

11. Use of an immersion treatment system according to one of the preceding claims, **characterised in that** the motor (26; 126; 264) by means of which the component (24; 124; 260) that defines the axis of rotation may be rotated is arranged on the slide (21; 121; 256) and is jointly therewith vertically traversable.

12. Use of an immersion treatment system according to one of the preceding claims, **characterised in that** the supporting structure (107; 234) is rotatable in relation to the drive carriage (106; 210) about a substantially vertical axis.

13. Use of an immersion treatment system according to Claim 12, **characterised in that** at least one guide rail (156), which cooperates with a guide member (155) provided on the supporting carriage (107), runs along the return path of the transport carriages (105) from the exit to the entry of the immersion treatment system (101).

14. Use of an immersion treatment system according to one of the preceding claims, **characterised in that** the transport carriage (208) is arranged such that the securing device (212, 272) may be conveyed laterally offset from the drive rail (216), at least along a section of the drive rail (216).

15. Use of an immersion treatment system according to Claim 14, **characterised in that** the securing device (212, 272) includes a supporting structure (212) with securing means (272) which is supported only by a side surface of a further component (256) of the transport carriage (208).

16. Use of an immersion treatment system according to Claim 14 or 15, **characterised in that** securing means (218, 248, 250) are provided which secure the transport carriage (208) to prevent tipping about a tilt axis parallel to the drive rail (216).

17. Use of an immersion treatment system according to Claim 16, **characterised in that** the securing means (218, 248, 250) include a support structure (218) which is arranged parallel to and below the drive rail (216) and onto which the supporting carriage (208) supports itself.

18. Use of an immersion treatment system according to Claim 10, **characterised in that** the securing means (218, 248, 250) include a guide roller (250) which is mounted on the transport carriage (208), is rotatable about a vertical axis of rotation and is guided in a guide rail (218) that is complementary to the guide roller (250), wherein the guide rail (218) runs below the drive rail (216) and parallel thereto.

## Revendications

1. Utilisation d'une installation de traitement par immersion pour carrosseries de véhicules, comprenant
a) au moins un bassin d'immersion (2 ; 102 ; 202) qui peut être rempli d'un liquide de traitement dans lequel les carrosseries de véhicules (3 ; 103 ; 204) à traiter peuvent être entièrement immergées ;
b) un système de transport (4 ; 104 ; 206), lequel peut approcher les carrosseries de véhicules (3 ; 103 ; 204) du bassin d'immersion (2; 102 ; 202), les faire entrer entièrement à l'intérieur du bassin d'immersion (2 ; 102 ; 202), les sortir du bassin d'immersion (2; 102; 202) et les en éloigner, et lequel comprend au moins un chariot de transport (5 ; 105 ; 208) qui présente un dispositif de fixation (29 ; 129 ; 212, 272) pouvant tourner autour d'un axe de rotation (24 ; 124 ; 262), auquel au moins une carrosserie de véhicule (3 ; 103 ; 204) peut être fixée ;
dans laquelle
c) le chariot de transport (5 ; 105 ; 208) comprend un coulisseau (21 ; 121 ; 256) déplaçable verticalement, sur lequel est monté un élément (24 ; 124 ; 260) définissant l'axe de rotation (24; 124 ; 262), de sorte que, au total pour ladite au moins une carrosserie de véhicule (3 ; 103 ; 204), il est possible de réaliser une séquence de mouvement qui est une superposition d'un mouvement linéaire horizontal, d'un mouvement linéaire vertical et d'un mouvement de rotation autour de l'axe de rotation (24 ; 124 ; 262);
dans le but de traiter par immersion ladite au moins une carrosserie de véhicule,
**caractérisée en ce que** l'utilisation consiste **en ce que**
d) cette séquence de mouvement est effectuée pendant que ladite au moins une carrosserie de véhicule (3 ; 103 ; 204) est guidée à travers ledit au moins un bassin d'immersion (2 ; 102 ; 202).

2. Utilisation d'une installation de traitement par immersion selon la revendication 1, **caractérisée en ce que** le chariot de transport (5 ; 105 ; 208) comprend :
a) un chariot d'entraînement (6 ; 106; 210) déplaçable par moteur sur un rail d'entraînement (41 ; 141 ; 216) ;
b) une structure porteuse (7 ; 107 ; 234) couplée au chariot d'entraînement (6; 106 ; 210), à laquelle le coulisseau (21; 121 ; 252) est fixé.

3. Utilisation d'une installation de traitement par immersion selon la revendication 2, **caractérisée en ce que** le rail d'entraînement (41 ; 141 ; 216) et le chariot d'entraînement (6 ; 106 ; 210) sont réalisés à la manière d'un convoyeur électrique suspendu traditionnel.

4. Utilisation d'une installation de traitement par immersion selon la revendication 2 ou 3, **caractérisée en ce que** la structure porteuse est un chariot porteur (7 ; 107), lequel présente un cadre de guidage (18 ; 118) qui est guidé sur au moins un rail de guidage (18 ; 108) s'étendant dans la direction de déplacement.

5. Utilisation d'une installation de traitement par immersion selon l'une des revendications 2 à 4, **caractérisée en ce que** le chariot d'entraînement (6) présente au moins une bobine d'enroulement (15) pouvant être entraînée en rotation par un moteur, sur laquelle, respectivement de laquelle au moins un moyen de traction flexible (17) peut être enroulé, respectivement déroulé, dont l'extrémité inférieure est reliée au coulisseau (21) déplaçable verticalement.

6. Utilisation d'une installation de traitement par immersion selon l'une des revendications 2 à 4, **caractérisée en ce que** la structure porteuse (107) présente sur une partie (150) non déplaçable verticalement au moins une bobine d'enroulement (115) pouvant être entraînée en rotation par un moteur, sur laquelle, respectivement de laquelle au moins un moyen de traction flexible (117) peut être enroulé, respectivement déroulé, dont l'extrémité inférieure est reliée au coulisseau (121) déplaçable verticalement.

7. Utilisation d'une installation de traitement par immersion selon la revendication 5 ou 6, **caractérisée en ce que** le moyen de traction flexible est une sangle.

8. Utilisation d'une installation de traitement par immersion selon la revendication 5 ou 6, **caractérisée en ce que** le moyen de traction flexible est une chaîne.

9. Utilisation d'une installation de traitement par immersion selon la revendication 8, **caractérisée en ce que** la chaîne flexible est conçue de façon à se raidir sous pression afin de pouvoir transmettre des forces de compression.

10. Utilisation d'une installation de traitement par immersion selon la revendication 2 ou 3, **caractérisée en ce que** la structure porteuse (254, 256) est comprise par un dispositif télescopique (214) pouvant être rentré ou sorti dans la direction verticale, lequel guide le coulisseau (256).

11. Utilisation d'une installation de traitement par immersion selon l'une des revendications précédentes, **caractérisée en ce que** le moteur (26 ; 126; 264) qui permet de faire tourner l'élément (24 ; 124; 260) définissant l'axe de rotation est disposé sur le coulisseau (21; 121 ; 258) et déplaçable verticalement en commun avec lui.

12. Utilisation d'une installation de traitement par immersion selon l'une des revendications précédentes, **caractérisée en ce que** la structure porteuse (107 ; 234) peut tourner par rapport au chariot d'entraînement (106 ; 210) autour d'un axe sensiblement vertical.

13. Utilisation d'une installation de traitement par immersion selon la revendication 12, **caractérisée en ce qu'**au moins un rail de guidage (156) s'étend le long du chemin de retour du chariot de transport (105) de la sortie à l'entrée de l'installation de traitement par immersion (101), lequel coopère avec un élément de guidage (155) prévu sur le chariot porteur (107).

14. Utilisation d'une installation de traitement par immersion selon l'une des revendications précédentes, **caractérisée en ce que** le chariot de transport (208) est conçu de façon que le dispositif de fixation (212, 272) puisse être transporté au moins le long d'un tronçon du rail d'entraînement (216), de manière décalé latéralement par rapport au rail d'entraînement (216).

15. Utilisation d'une installation de traitement par immersion selon la revendication 14, **caractérisée en ce que** le dispositif de fixation (212, 272) comprend une structure porteuse (212) avec des moyens de fixation (272), laquelle est portée seulement par l'intermédiaire d'une surface latérale par un autre élément (256) du chariot de transport (208).

16. Utilisation d'une installation de traitement par immersion selon la revendication 14 ou 15, **caractérisée en ce que** des moyens de sécurisation (218, 248, 250) sont prévus, lesquelles sécurisent le chariot de transport (208) contre un basculement autour d'un axe de basculement parallèle au rail d'entraînement (216).

17. Utilisation d'une installation de traitement par immersion selon la revendication 16, **caractérisée en ce que** les moyens de sécurisation (218, 248, 250) comprennent une structure d'appui (218) parallèle au rail d'entraînement (216) et disposée au-dessous de celui-ci, sur laquelle le chariot porteur (208) s'appuie.

18. Utilisation d'une installation de traitement par immersion selon la revendication 10, **caractérisée en ce que** les moyens de sécurisation (218, 248, 250) comprennent un galet de guidage (250) disposé sur le chariot de transport (208), pouvant tourner autour d'un axe de rotation vertical, lequel est guidé dans un rail de guidage (218) complémentaire, le rail de guidage (218) s'étendant au-dessous du rail d'entraînement (216), parallèlement à celui-ci.
